# EUROPEAN PATENT APPLICATION

(11) **EP 4 485 178 A1**
(43) Date of publication of application: **01.01.2025**
(21) Application number: 23213640.8
(22) Date of filing: 01.12.2023
(51) Int. Cl.: G06F 9/30

(54) **VECTOR PACKED MATRIX MULTIPLICATION AND ACCUMULATION PROCESSORS, METHODS, SYSTEMS, AND INSTRUCTIONS**

(30) Priority: 30.06.2023 US 202318217506
(71) Applicant: INTEL Corporation, Santa Clara, CA 95054 (US)
(72) Inventor: Heinecke, Alexander, San Jose, 95134 (US); Wong, Wing Shek, Austin, 78733 (US); Robinson, Stephen, Austin, 78749 (US); Sade, Raanan, 97229 Portland (IL); Gradstein, Amit, 3052316 Binyamina (IL); Rubanovich, Simon, 34792 Haifa (IL); Espig, Michael, Newberg, 97132 (US); Baum, Dan, 34354 Haifa (IL); Georganas, Evangelos, San Jose, 95129 (US); Kalamkar, Dhiraj, 560103 Bangalore (IN)
(74) Representative: Goddar, Heinz J.

(57) **Abstract**

Decoder circuitry to decode an instruction indicating a first vector register having a 128-bit lane to store a first matrix having two rows by K columns of data elements having a number of bits, a storage location having 128 bits to store a second matrix having K rows by two columns of data elements having the number of bits, and a second vector register having a 128-bit lane to store a third matrix having two rows by two columns of data elements having a greater number of bits. Execution circuitry is to perform operations for the instruction, including to generate and store a result matrix having two rows by two columns of result data elements having the greater number of bits in 128-bit lane of second vector register. The result matrix represents accumulation of the third matrix with product matrix generated from matrix multiplication using the first and second matrices.

## Description

### BACKGROUND

### Technical Field

Embodiments described herein generally relate to processors. In particular, embodiments described herein generally relate to processors and instructions to process matrices.

### Background Information

A matrix is typically regarded as a two-dimensional square or rectangular array or arrangement of numbers into rows and columns of the matrix. For example, a 4x4 matrix may have sixteen numbers arranged into four rows and four columns.

Matrices are used in a wide variety of applications and for a wide variety of different purposes (e.g., graphics processing, signal processing, seismology, etc.). Recently, matrices are widely used to process data for artificial intelligence, machine learning, deep learning, neural networks, general-purpose graphics processing, and others.

### BRIEF DESCRIPTION OF THE DRAWINGS

Various examples in accordance with the present disclosure will be described with reference to the drawings, in which:
**FIG. 1** is a block diagram of an embodiment of a processor that is operative to perform an embodiment of an instruction (e.g., a vector packed matrix multiplication and accumulation instruction).
**FIG. 2** is a block diagram of an embodiment of a processor to perform a vector packed matrix multiplication and accumulation instruction using a first matrix and a second matrix both having 32-bit data elements.
**FIG. 3** is a block diagram of an embodiment of a processor to perform a vector packed matrix multiplication and accumulation instruction using a first matrix and a second matrix both having 16-bit data elements.
**FIG. 4** is a block diagram of an embodiment of a processor to perform a vector packed matrix multiplication and accumulation instruction using a first matrix and a second matrix both having 8-bit data elements.
**FIG. 5** is a block diagram of a more detailed example embodiment of a processor that is operative to perform an embodiment of a vector packed matrix multiplication and accumulation instruction.
**FIG. 6** is a block flow diagram of an embodiment of a method of performing an embodiment of a vector packed matrix multiplication and accumulation instruction.
**FIG. 7** is a block flow diagram of an embodiment of a method of performing an embodiment of a vector packed matrix multiplication and accumulation instruction using emulation or binary translation.
**FIG. 8** is a block diagram of an example embodiment of a suitable set of vector registers.
**FIG. 9** illustrates an example computing system.
**FIG. 10** illustrates a block diagram of an example processor and/or System on a Chip (SoC) that may have one or more cores and an integrated memory controller.
**FIG. 11(A)** is a block diagram illustrating both an example in-order pipeline and an example register renaming, out-of-order issue/execution pipeline according to examples.
**FIG. 11(B)** is a block diagram illustrating both an example in-order architecture core and an example register renaming, out-of-order issue/execution architecture core to be included in a processor according to examples.
**FIG. 12** illustrates examples of execution unit(s) circuitry.
**FIG. 13** is a block diagram of a register architecture according to some examples.
**FIG. 14** illustrates examples of an instruction format.
**FIG. 15** illustrates examples of an addressing information field.
**FIG. 16** illustrates examples of a first prefix.
**FIGS. 17(A)****-(D)** illustrate examples of how the R, X, and B fields of the first prefix in **FIG. 16** are used.
**FIGS. 18(A)****-(B)** illustrate examples of a second prefix.
**FIG. 19** illustrates examples of a third prefix.
**FIG. 20** is a block diagram illustrating the use of a software instruction converter to convert binary instructions in a source instruction set architecture to binary instructions in a target instruction set architecture according to examples.

### DETAILED DESCRIPTION OF EMBODIMENTS

Disclosed herein are embodiments of instructions, embodiments of processors to perform the instructions, embodiments of methods performed by the processors when performing the instructions, embodiments of systems incorporating one or more processors to perform the instructions, and embodiments of programs or machine-readable mediums storing or otherwise providing the instructions. In the following description, numerous specific details are set forth (e.g., specific instruction operations, data formats, processor configurations, microarchitectural details, sequences of operations, etc.). However, embodiments may be practiced without these specific details. In other instances, well-known circuits, structures, and techniques have not been shown in detail to avoid obscuring the understanding of the description.

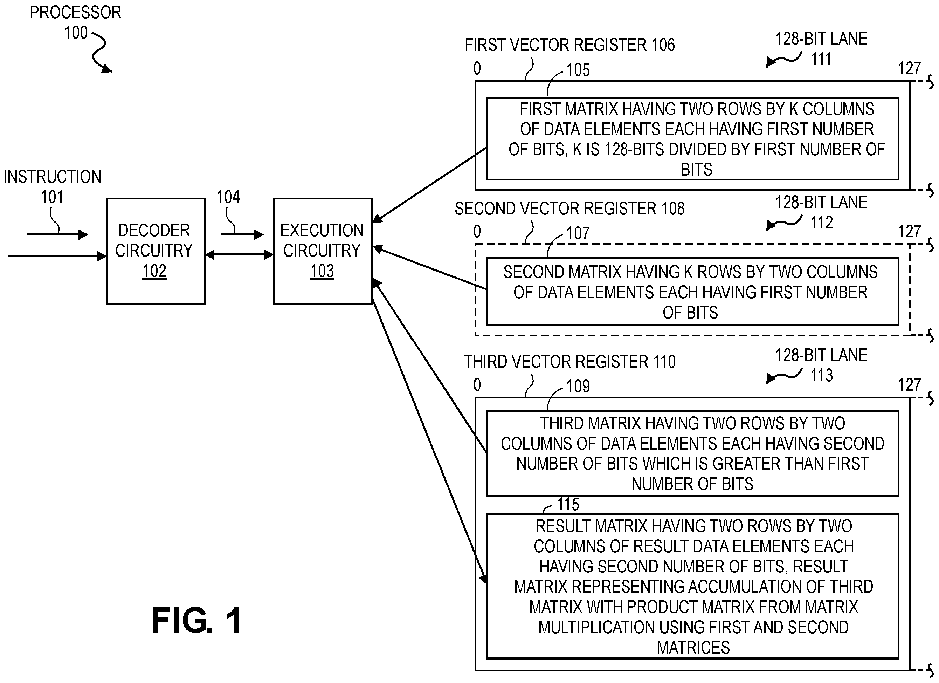

**FIG. 1** is a block diagram of an embodiment of a processor 100 that is operative to perform an embodiment of an instruction 101 (e.g., a vector packed matrix multiplication and accumulation instruction). In some embodiments, the processor may be a general-purpose processor (e.g., a general-purpose microprocessor or central processing unit (CPU) of the type used in desktops, laptops, servers, smartphones, and other computer systems). Alternatively, the processor may be a special-purpose processor. Examples of suitable special-purpose processors include, but are not limited to, machine-learning processors, artificial intelligence processors, coprocessors, graphics processors, network processors, communications processors, cryptographic processors, and digital signal processors (DSPs). The processor may have any of various complex instruction set computing (CISC) architectures, reduced instruction set computing (RISC) architectures, very long instruction word (VLIW) architectures, hybrid architectures, other types of architectures, or have a combination of different architectures (e.g., different cores may have different architectures). In some embodiments, the processor may include (e.g., be disposed on) at least one integrated circuit or semiconductor die. In some embodiments, the processor may include at least some hardware (e.g., transistors, capacitors, circuitry, non-volatile memory storing circuit-level instructions/control signals).

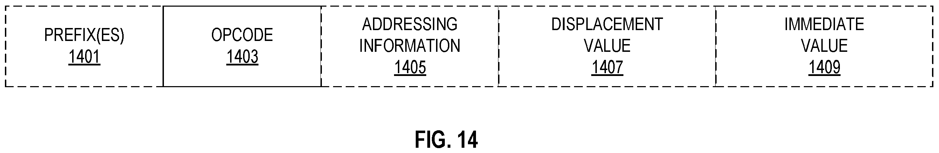

The processor 100 may be coupled to receive the instruction 101. For example, the processor may have an interface to couple with an interconnect to receive the instruction from memory over the interconnect. The instruction may represent a macroinstruction, machine code instruction, or other instruction of an instruction set of a processor. The instruction may have various formats or encodings, such as, for example, those described further below (e.g., for **FIGs. 14-19**). The instruction has one or more fields for an opcode that at least partially or fully specifies the operation to be performed (e.g., matrix multiplication and accumulation).

In some embodiments, the instruction may explicitly specify (e.g., through one or more fields or a set of bits), or otherwise indicate (e.g., implicitly indicate), a first (e.g., source) matrix 105, may specify or otherwise indicate a second (e.g., source) matrix 107, and may specify or otherwise indicate a third (e.g., source) matrix 109. For example, as shown in the illustrated embodiment, the instruction may specify or otherwise indicate a first (e.g., source) vector register 106 storing the first matrix, may specify or otherwise indicate a second (e.g., source) vector register 108 storing the second matrix, and may specify or otherwise indicate a third (e.g., source/destination) vector register 110 storing the third matrix. Vector registers are also sometimes referred to in the art as packed data registers and single instruction, multiple data (SIMD) registers. Alternatively, one or more of the first, second, and third matrices may optionally be stored in memory or other storage locations. For example, as indicated by the dashed lines used to represent the second vector register, in another embodiment the second matrix may optionally be stored in a memory location. The instruction may have source and/or destination operand specification fields to specify registers, memory locations, or other storage locations first, second, and third matrices.

In the illustrated embodiment, the first vector register has a 128-bit lane or portion 111 to store the first matrix 105, the second vector register has a 128-bit lane or portion 112 to store the second matrix 107, and the third vector register has a 128-bit lane or portion 113 to store the third matrix 109. The first matrix may have two rows (e.g., M=2) by K columns of data elements each having a first number of bits, wherein K is equal to 64-bits divided by the first number of bits. The second matrix may have K rows by two columns (e.g., N=2) of data elements each having the first number of bits. K may represent the common dimension, often referred to as the K dimension, or inner-product dimension, shared by the two matrices to be multiplied. The third matrix may have two rows by two columns of data elements each having a second number of bits, where the second number of bits is greater than the first number of bits. In some embodiments, each of the first, second, and third vector registers may be a 128-bit register having only the respective 128-bit lane. In other embodiments, each of the first, second, and third vector registers may be a 256-bit register having two 128-bit lanes. In still other embodiments, each of the first, second, and third vector registers may be a 512-bit register having four 128-bit lanes. In still other embodiments, each of the first, second, and third vector registers may have another number of 128-bit lanes (e.g., a 384-bit register can have three 128-bit lanes, a 640-bit register can have five 128-bit lanes, a 768-bit register can have six 128-bit lanes, a 1024-bit register can have eight 128-bit lanes, a 2048-bit register can have sixteen 128-bit lanes, and so on.). In some embodiments, each of two or more 128-bit lanes of a vector register may be used to store a corresponding matrix of the same dimensions and data element sizes as those mentioned for the first 128-bit lanes of the same vector register. Specific examples of suitable 128-bit, 256-bit, and 512-bit vector registers include, but are not limited to, the 128-bit xmm, 256-bit ymm, and 512-bit zmm registers mentioned elsewhere herein.

In various different embodiments, the first number of bits of the data elements of the first and second matrices may be 2-bits, 4-bits, 8-bits, 16-bits, or 32-bits. For 2-bit data elements, K may be thirty-two. For 4-bit data elements, K may be sixteen. For 8-bit data elements, K may be eight. For 16-bit data elements, K may be four. For 32-bit data elements, K may be two. Examples of suitable types of 2-bit and 4-bit data elements for the first and second matrixes include, but are not limited to, 2-bit and 4-bit signed and unsigned integers. Examples of suitable types of 8-bit data elements for the first and second matrixes include, but are not limited to, 8-bit signed integers (S8), 8-bit unsigned integers (U8), and 8-bit floating-point data elements (FP8). Examples of suitable types of 8-bit floating-point data elements for the first and second matrixes include, but are not limited to, bfloat8 (BF8) having five exponent bits and two explicit mantissa/significand bits and hfloat8 (HF8) having four exponent bits and three explicit mantissa/significand bits. In various embodiments, the first and second matrices may both have S8 data elements, the first and second matrices may both have U8 data elements, the first matrix may have S8 data elements and the second matrix may have U8 data elements, or the first matrix may have U8 data elements and the second matrix may have S8 data elements. In various other embodiments, the first and second matrices may both have BF8 data elements, the first and second matrices may both have HF8 data elements, the first matrix may have BF8 data elements and the second matrix may have HF8 data elements, or the first matrix may have HF8 data elements and the second matrix may have BF8 data elements. Examples of suitable types of 16-bit data elements for the first and second matrixes include, but are not limited to, 16-bit signed integers (S16), 16-bit unsigned integers (U16), half precision floating-point data elements (float16 or F16), and bfloat16 (BF16 floating-point data elements. In various embodiments, the first and second matrices may both have F16 data elements, or the first and second matrices may both have BF16 data elements. Examples of suitable types of 32-bit data elements for the first and second matrixes include, but are not limited to, 32-bit signed integers (S32), 32-bit unsigned integers (U32), single-precision floating-point data elements (float32 or F32), and TensorFloat-32 floating-point data elements (TF32) having eight exponent bits and ten explicit mantissa/significand bits. In some embodiments, the first and second matrices may both have TF32 data elements.

Conventionally, vector registers have been used to store vectors but typically not matrices. Vectors are also sometimes referred to in the art as packed data and SIMD data. Vectors represent one-dimensional arrays or data structures. In contrast, in some embodiments, at least one vector register may be used to store a matrix. The matrix may represent are two-dimensional arrangement of data elements (e.g., numbers or values) into rows and columns. However, rather than the matrix being stored in a tile, two-dimensional set of registers, or other two-dimensional storage structure, the matrix may be stored in a single vector register (e.g., in a single vector and/or one-dimensional layout). Such a matrix may also be referred to herein as a vector packed matrix because the matrix is packed into a vector or one-dimensional layout.

The vector registers 106, 108, 110 may represent architecturally-visible or architectural registers that are visible to software and/or a programmer and/or are the registers indicated by instructions of the instruction set of the processor to identify operands. These architectural registers are contrasted to other non-architectural registers in a microarchitecture (e.g., temporary registers, reorder buffers, retirement registers, etc.). These vector registers may be implemented in different ways in different microarchitectures and are not limited to any particular design. Examples of suitable types of vector registers include, but are not limited to, dedicated physical registers, dynamically allocated physical registers using register renaming, and combinations thereof.

Referring again to **FIG. 1****,** the processor includes decoder circuitry 102 (e.g., an instruction decoder). The decoder circuitry may be coupled to receive the instruction. The decoder circuitry may be operative to decode the instruction into one or more lower-level control signals, operations, or decoded instructions 104 (e.g., one or more micro-instructions, micro-operations, micro-code entry points, etc.). In some embodiments, the decoder circuitry may include at least one input structure (e.g., a port, interconnect, or interface) coupled to receive the instruction, an instruction recognition and decode logic coupled therewith to recognize and decode the instruction into one or more lower-level control signals, operations, or decoded instructions, and at least one output structure (e.g., a port, interconnect, or interface) coupled therewith to output the one or more lower-level control signals, operations, or decoded instructions. The decoder circuitry and/or its instruction recognition and decode logic may be implemented using various instruction decode mechanisms including, but not limited to, microcode read only memories (ROMs), look-up tables, hardware implementations, programmable logic arrays (PLAs), other mechanisms suitable to implement instruction decoder circuitry, and combinations thereof. In some embodiments, the decoder circuitry may include at least some hardware (e.g., transistors, integrated circuitry, on-die read-only memory or other non-volatile memory storing microcode or other hardware-level instructions, or any combination thereof). In some embodiments, the decoder circuitry may be included on a die, integrated circuit, or semiconductor substrate.

Execution circuitry 103 (e.g., an execution unit) is coupled with the decoder circuitry 102 (e.g., to receive the one or more lower-level control signals, operations, or decoded instructions 104). The execution circuitry is also coupled to receive the first, second, and third matrices 105, 107, 109 (e.g., coupled with the first, second, and third vector registers 106, 108, 110). In some embodiments, the execution circuitry may be on a die or integrated circuit along with the decoder circuitry. The execution circuitry may be operative to perform operations corresponding to and/or as specified by and/or as controlled by the instruction 101. For example, the one or more lower-level control signals, operations, or decoded instructions may be executed by the execution circuitry to control the execution circuitry to perform operations corresponding to the instruction (e.g., operations that are at least partially specified by the opcode of the instruction).

In some embodiments, the operations may include generating a result matrix 115 having two rows by two columns (e.g., M=2, N=2) of result data elements each having the second number of bits. In some embodiments, the second number of bits is 32 bits. In some embodiments, the result matrix may represent an accumulation of the third matrix 109 (e.g., an accumulation matrix) with a product matrix (e.g., having two rows by two columns) generated from a matrix multiplication using and/or involving and/or based on the first and second matrices 105, 107. By way of example, the product matrix having M rows by N columns may be generated by matrix multiplication involving the first matrix having M rows by K columns and the second matrix having K rows by N columns, where M and N are each two. In some embodiments, the product matrix may be generated from a matrix multiplication using the first and second matrices in which the data elements of the first and second matrices are converted from the first number of bits to a greater number of bits (e.g., converted from 8-bits or 16-bits to 32-bits) prior to the matrix multiplication. In some embodiments, the product matrix may be generated from a matrix multiplication using the first and second matrices in which floating-point rounding may optionally be performed as needed during the matrix multiplication and/or accumulation. In various embodiments, rounding may be performed as needed after each multiplication used to generate each result element, rounding may be performed as needed after each accumulate operation used to generate each result element, rounding may be performed as needed after each multiplication used to generate each result element and also as needed after each accumulate operation used to generate each result element, as needed once after all operations to generate a result element. In some embodiments, the operations may include storing the result matrix in the 128-bit lane of the third vector register that was initially used to store the third matrix. That is, the third vector register may be a source/destination vector register that is initially used as a source of the third vector and implicitly subsequently reused as a destination where the result matrix is to be stored.

In some embodiments, the execution circuitry, to generate and store the result matrix, may perform operations including, for each column n of the two columns of the second matrix, and for each row m of the two rows of the first matrix: (1) converting K data elements from the row m of the first matrix to K corresponding converted data elements each having more bits than the first number of bits, and convert K data elements from the column n of the second matrix to K corresponding converted data elements each having more bits than the first number of bits; (2) generating K products, including multiplying the K converted data elements corresponding to the row m and the K converted data elements corresponding to the column n, where generating the K products optionally may include performing rounding as needed; (3) generating a result data element having the second number of bits, including accumulating the K products with a data element from a corresponding row m of the two rows, and a corresponding column n of the two columns, of the third matrix, where generating a result data element optionally may include performing rounding as needed; and (4) storing the result data element in the 128-bit lane of the third vector register at a position corresponding to the row m and the column n of the third matrix. The accumulating of the K products with the data element from the third matrix as mentioned immediately above for item (3) may be performed in various different ways including accumulating the K products in various different orders with the data element from the third matrix. In some embodiments, the execution circuitry, to generate and store the result matrix, may perform any of the operations of the example embodiments of the instructions shown and described further below.

In some embodiments, the first vector register 106 may optionally have a second 128-bit lane to store a fourth matrix having two rows by K columns of data elements each having the first number of bits, the second vector register 108 may optionally have a second 128-bit lane to store a fifth matrix having K rows by two columns of data elements each having the first number of bits, and the third vector register 110 may optionally have a second 128-bit lane to store a sixth matrix having two rows by two columns of data elements each having the second number of bits. In such embodiments, the execution circuitry, to perform the operations corresponding to the instruction, may further generate a second result matrix having two rows by two columns (e.g., M=2, N=2) of result data elements each having the second number of bits. In some embodiments, the second result matrix may represent an accumulation of the sixth matrix (e.g., a second accumulation matrix) with a product matrix (e.g., having two rows by two columns) generated from a matrix multiplication using the fourth and fifth matrices. The second result matrix may be stored in the second 128-bit lane of the third vector register. In other embodiments, there may be additional 128-bit lanes or portions. A separate 2x2xK matrix multiply-accumulation operation may be performed for each of these 128-bit lanes or portions of the vector registers.

In some embodiments, the processor may have a register (e.g., a MXCSR or other floating-point control register) to control floating-point operations. In some embodiments, the register may have one or more fields (e.g., rounding mode field) to specify one of a plurality of supported rounding modes to be used for floating-point operations. In some embodiments, the execution circuitry, to perform the operations corresponding to the instruction, when at least some data elements of the matrices are floating-point data elements, may perform rounding according to only a single rounding mode (e.g., a round to nearest even rounding mode) regardless of and/or irrespective of and/or without checking the one or more fields (e.g., the rounding mode field) in the register. In some such embodiments, the rounding may be performed according to the single rounding mode in a mathematically precise way rather than through a simplification which leads to mathematically imprecise results. In some embodiments, the register may have one or more fields (e.g., a Denormals-Are-Zero (DAZ) bit or field) to specify whether denormal values in the inputs to floating-point instructions/operations (e.g., the source matrices) are to be set or made to be or treated as zero. In some such embodiments, the execution circuitry, to perform the operations corresponding to the instruction, when at least some data elements of the matrices are floating-point data elements, may set or make denormals in the inputs to floating-point operations as zero or treat denormals in the inputs to floating-point operations as zero regardless of and/or irrespective of and/or without checking whether the one or more fields (e.g., the DAZ bit or field) in the register specify whether denormal results of floating-point operations are to be forced to zero. In some embodiments, the register may have one or more fields (e.g., a Flush-To-Zero (FTZ) bit or field) to specify to specify to specify whether denormal results of floating-point operations are to be set, forced, or made to be zero. In some such embodiments, the execution circuitry, to perform the operations corresponding to the instruction, when at least some data elements of the matrices are floating-point data elements, may to set, force, or make denormal results of floating-point operations are to be to be zero regardless of and/or irrespective of and/or without checking whether the one or more fields (e.g., the FTZ bit or field) in the register specify whether denormal results of floating-point operations are to be set, forced, or made to be zero. In some embodiments, the execution circuitry, when at least some data elements of the matrices are floating-point data elements, may complete performance of the operations corresponding to the instruction without accessing (e.g., without reading from and without writing to) the register (e.g., the MXCSR or other floating-point control register).

The execution circuitry and/or the processor may include specific or particular logic (e.g., transistors, integrated circuitry, or other hardware potentially combined with firmware (e.g., instructions stored in non-volatile memory) and/or software) that is operative to perform the instruction and/or store the result matrix in response to and/or due to the instruction (e.g., in response to the one or more lower-level control signals, operations, or decoded instructions that have been decoded from the instruction). In some embodiments, the execution circuitry may include multiplication circuitry (e.g., matrix multiplication circuitry), addition circuitry (e.g., matrix addition circuitry), floating-point rounding circuitry, and circuitry to perform other operations described herein. In some embodiments, the execution circuitry may include one or more input structures (e.g., a port, interconnect, or interface) coupled to receive the first, second, and third matrices, circuitry or logic coupled therewith to receive and process these matrices to generate the result matrix, and one or more output structures (e.g., a port, interconnect, or interface) coupled therewith to output the result matrix (e.g., store it in a vector register).

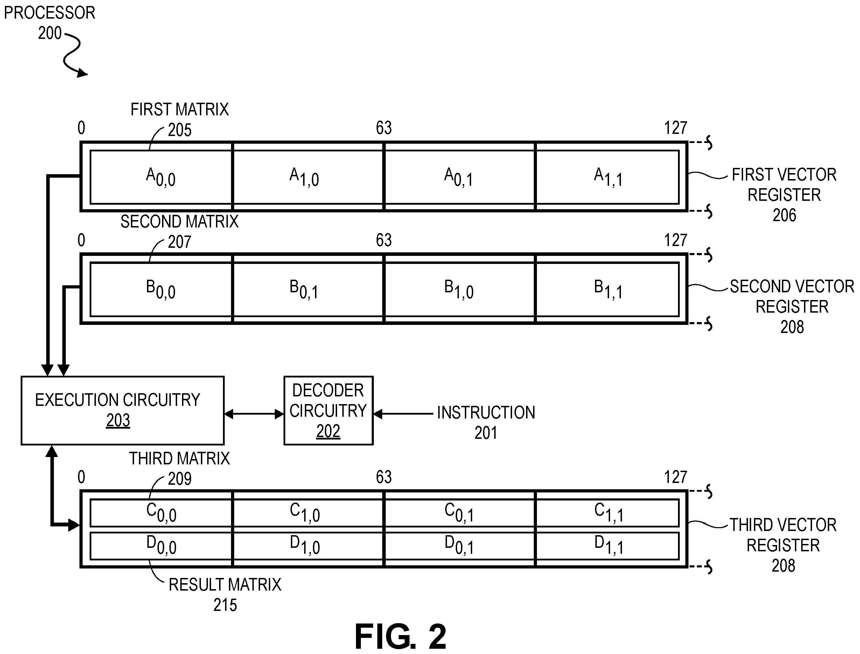

**FIG. 2** is a block diagram of an embodiment of a processor 200 to perform a vector packed matrix multiplication and accumulation instruction 201 to perform vector packed matrix multiplication and accumulation operations using a first matrix 205 and a second matrix 207 both having 32-bit data elements. The processor includes a decoder circuitry 202 to decode the vector packed matrix multiplication and accumulation instruction. The decoder circuitry may be similar to, or the same as, the decoder circuitry 102 described for **FIG. 1****.** The instruction may specify or otherwise indicate a first vector register 206 having a 128-bit lane storing the first matrix 205, a second vector register 208 having a 128-bit lane storing the second matrix 207, and a third vector register 210 having a 128-bit lane storing a third matrix 209.

For these 32-bit data elements, the first and second matrices have common dimension K=2 (e.g., K=2=64/32). The first matrix has four 32-bit data elements, arranged in two rows by two columns, labeled A_{0,0} in bits [31:0], A_{1,0} in bits [63:32], A_{0,1} in bits [95:64], and A_{1,1} in bits [127:96], where the A elements are indexed as A_{k,m}. The second matrix has four 32-bit data elements, arranged in two rows by two columns, labeled B_{0,0} in bits [31:0], B0,1 in bits [63:32], B_{1,0} in bits [95:64], and B_{1,1} in bits [127:96], where the B elements are indexed as B_{n,k}. The third matrix has four 32-bit data elements, arranged in two rows by two columns, labeled C_{0,0} in bits [31:0], C_{1,0} in bits [63:32], C_{0,1} in bits [95:64], and C_{1,1} in bits [127:96], where the C elements are indexed as C_{n,m}. This arrangement of the 32-bit data elements within the matrices may tend to be more efficient than certain other arrangements (e.g., in terms of managing the smaller matrices as part of an overall algorithm of multiplying and accumulating larger matrices), although other arrangements may optionally be used, if desired.

Execution circuitry 203 is coupled with the decoder circuitry 202. The execution circuitry may perform vector packed matrix multiplication and accumulation operations corresponding to the instruction. These operations may include generating a result matrix 215. The result matrix may have four 32-bit data elements, arranged in two rows by two columns, labeled D_{0,0} in bits [31:0], D_{1,0} in bits [63:32], D_{0,1} in bits [95:64], and D_{1,1} in bits [127:96], where the D elements are indexed as D_{n,m}. The result matrix may represent an accumulation of the third matrix 209 with a product matrix generated from a matrix multiplication using the first matrix 205 and the second matrix 207. This may be done as described elsewhere herein (e.g., for **FIG. 1**), for example, optionally with conversion, optionally with rounding as needed, and so on. The execution circuitry may also store the result matrix in the 128-bit lane of the third vector register. For example, the result matrix may overwrite the third matrix in the 128-bit lane of the third vector register.

In some embodiments, the 32-bit data elements of the first and second matrices may each be TF32 data elements. In some embodiments, the 32-bit data elements of the third and fourth matrices may each be single precision floating-point (F32) data elements. In some embodiments each vector register may optionally include more than one 128-bit lane (e.g., two, four, eight, or some other number of 128-bit lanes) with each 128-bit lane storing a respective matrix and the operations may further include performing a separate multiplication and accumulation operation similar to the one described on these different lanes of matrices. In some embodiments, the vector packed matrix multiplication and accumulation instruction 201 may be the VMMTF32PS instruction described further below, and the execution circuitry may perform any of the operations described for the VMMTF32PS instruction further below.

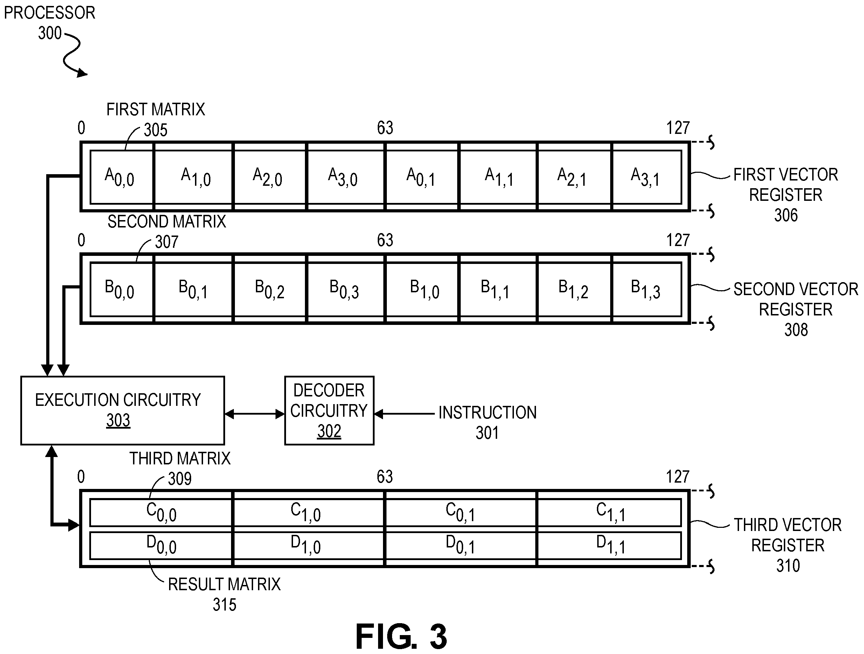

**FIG. 3** is a block diagram of an embodiment of a processor 300 to perform a vector packed matrix multiplication and accumulation instruction 301 to perform vector packed matrix multiplication and accumulation operations using a first matrix 305 and a second matrix 307 both having 16-bit data elements. The processor includes a decoder circuitry 302 to decode the vector packed matrix multiplication and accumulation instruction. The decoder circuitry may be similar to, or the same as, the decoder circuitry 102 described for **FIG. 1****.** The instruction may specify or otherwise indicate a first vector register 306 having a 128-bit lane storing the first matrix 305, a second vector register 308 having a 128-bit lane storing the second matrix 307, and a third vector register 310 having a 128-bit lane storing a third matrix 309.

For these 16-bit data elements, the first and second matrices have common dimension K=4 (e.g., K=4=64/16). The first matrix has eight 16-bit data elements, arranged in two rows by four columns, labeled A_{0,0} in bits [15:0], A_{1,0} in bits [31:16], A_{2,0} in bits [47:32], A_{3,0} in bits [63:48], A_{0,1} in bits [79:64], A_{1,1} in bits [95:80], A_{2,1} in bits [111:96], and A_{3,1} in bits [127:112], where the A elements are indexed as A_{k,m}. The second matrix has eight 16-bit data elements, arranged in four rows by two columns, labeled B_{0,0} in bits [15:0], B_{0,1} in bits [31:16], B_{0,2} in bits [47:32], B_{0,3} in bits [63:48], B_{1,0} in bits [79:64], B_{1,1} in bits [95:80], B_{1,2} in bits [111:96], and B_{1,3} in bits [127:112], where the B elements are indexed as B_{n,k}. The third matrix has four 32-bit data elements, arranged in two rows by two columns, labeled C_{0,0} in bits [31:0], C_{1,0} in bits [63:32], C_{0,1} in bits [95:64], and C_{1,1} in bits [127:96], where the C elements are indexed as C_{n,m}. This arrangement of the 16-bit and 32-bit data elements within the matrices may tend to be more efficient than certain other arrangements (e.g., in terms of managing the smaller matrices as part of an overall algorithm of multiplying and accumulating larger matrices), although other arrangements may optionally be used, if desired.

Execution circuitry 303 is coupled with the decoder circuitry 302. The execution circuitry may perform vector packed matrix multiplication and accumulation operations corresponding to the instruction. These operations may include generating a result matrix 315. The result matrix may have four 32-bit data elements, arranged in two rows by two columns, labeled D_{0,0} in bits [31:0], D_{1,0} in bits [63:32], D_{0,1} in bits [95:64], and D_{1,1} in bits [127:96], where the D elements are indexed as D_{n,m}. The result matrix may represent an accumulation of the third matrix 309 with a product matrix generated from a matrix multiplication using the first matrix 305 and the second matrix 307. This may be done as described elsewhere herein (e.g., for **FIG. 1**), for example, optionally with conversion, optionally with rounding as needed, and so on. The execution circuitry may also store the result matrix in the 128-bit lane of the third vector register. For example, the result matrix may overwrite the third matrix in the 128-bit lane of the third vector register.

In some embodiments, the 16-bit data elements of the first and second matrices may each be bfloat 16 (BF16) data elements. In other embodiments, the 16-bit data elements of the first and second matrices may each be half precision floating-point (float16 or F16) data elements. In some embodiments, the 32-bit data elements of the third and fourth matrices may each be single precision floating-point (F32) data elements. In some embodiments each vector register may optionally include more than one 128-bit lane (e.g., two, four, eight, or some other number of 128-bit lanes) with each 128-bit lane storing a respective matrix and the operations may further include performing a separate multiplication and accumulation operation similar to the one described on these different lanes of matrices. In some embodiments, the vector packed matrix multiplication and accumulation instruction 301 may be the VMMBF16PS instruction described further below, and the execution circuitry may perform any of the operations described for the VMMBF16PS instruction further below. In other embodiments, the vector packed matrix multiplication and accumulation instruction 301 may be the VMMF16PS instruction described further below, and the execution circuitry may perform any of the operations described for the VMMF16PS instruction further below.

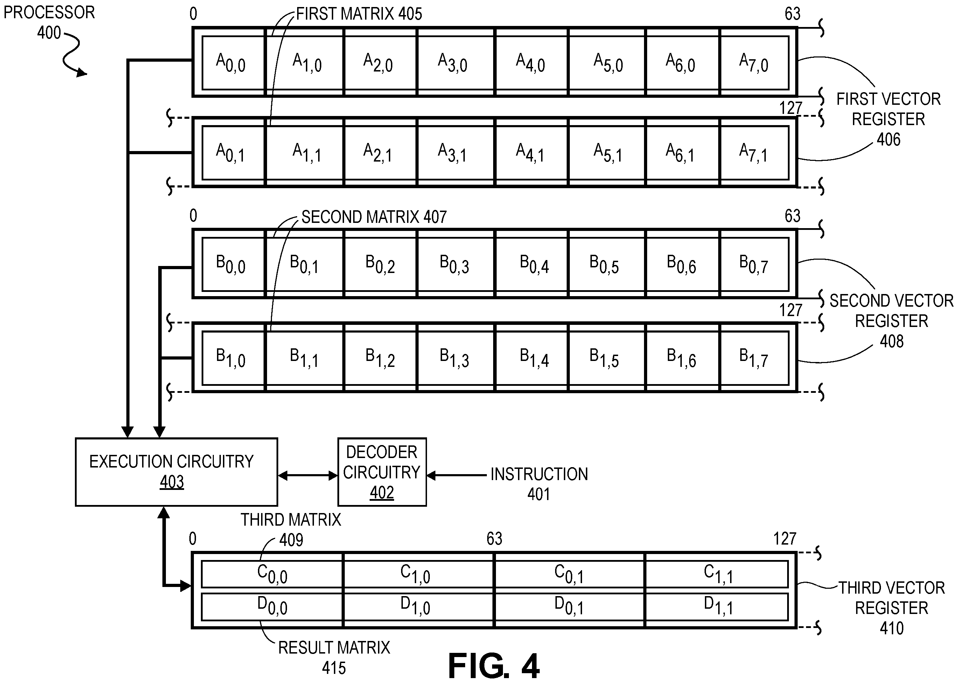

**FIG. 4** is a block diagram of an embodiment of a processor 400 to perform a vector packed matrix multiplication and accumulation instruction 401 to perform vector packed matrix multiplication and accumulation operations using a first matrix 405 and a second matrix 407 both having 8-bit data elements. The processor includes a decoder circuitry 402 to decode the vector packed matrix multiplication and accumulation instruction. The decoder circuitry may be similar to, or the same as, the decoder circuitry 102 described for **FIG. 1****.** The instruction may specify or otherwise indicate a first vector register 406 having a 128-bit lane storing the first matrix 405, a second vector register 408 having a 128-bit lane storing the second matrix 407, and a third vector register 410 having a 128-bit lane storing a third matrix 409.

For these 8-bit data elements, the first and second matrices have common dimension K=8 (e.g., K=8=64/8). The first matrix has sixteen 8-bit data elements, arranged in two rows by eight columns, labeled A_{0,0} in bits [7:0], A_{1,0} in bits [15:8], A_{2,0} in bits [23:16], A_{3,0} in bits [31:24], A_{4,0} in bits [39:32], A_{5,0} in bits [47:40], A_{6,0} in bits [55:48], and A_{7,0} in bits [63:56], A_{0,1} in bits [71:64], A_{1,1} in bits [79:72], A_{2,1} in bits [87:80], A_{3,1} in bits [95:88], A_{4,1} in bits [103:96], A_{5,1} in bits [111:104], A_{6,1} in bits [119:112], and A_{7,1} in bits [127:120], where the A elements are indexed as A_{k,m}. The second matrix has sixteen 8-bit data elements, arranged in eight rows by two columns, labeled B_{0,0} in bits [7:0], B_{0,1} in bits [15:8], B_{0,2} in bits [23:16], B_{0,3} in bits [31:24], B_{0,4} in bits [39:32], B_{0,5} in bits [47:40], B_{0,6} in bits [55:48], B_{0,7} in bits [63:56], B_{1,0} in bits [71:64], B_{1,1} in bits [79:72], B_{1,2} in bits [87:80], B_{1,3} in bits [95:88], B_{1,4} in bits [103:96], B_{1,5} in bits [111:104], B_{1,6} in bits [119:112], and B_{1,7} in bits [127:120], where the B elements are indexed as B_{n,k}. The third matrix has four 32-bit data elements, arranged in two rows by two columns, labeled C_{0,0} in bits [31:0], C_{1,0} in bits [63:32], C_{0,1} in bits [95:64], and C_{1,1} in bits [127:96], where the C elements are indexed as C_{n,m}. This arrangement of the 8-bit and 32-bit data elements within the matrices may tend to be more efficient than certain other arrangements (e.g., in terms of managing the smaller matrices as part of an overall algorithm of multiplying and accumulating larger matrices), although other arrangements may optionally be used, if desired.

Execution circuitry 403 is coupled with the decoder circuitry 402. The execution circuitry may perform vector packed matrix multiplication and accumulation operations corresponding to the instruction. These operations may include generating a result matrix 415. The result matrix may have four 32-bit data elements, arranged in two rows by two columns, labeled _{D0,0} in bits [31:0], D_{1,0} in bits [63:32], D_{0,1} in bits [95:64], and D_{1,1} in bits [127:96], where the D elements are indexed as D_{n,m}. The result matrix may represent an accumulation of the third matrix 409 with a product matrix generated from a matrix multiplication using the first matrix 405 and the second matrix 407. This may be done as described elsewhere herein (e.g., for **FIG. 1**), for example, optionally with conversion, optionally with rounding as needed, and so on. The execution circuitry may also store the result matrix in the 128-bit lane of the third vector register. For example, the result matrix may overwrite the third matrix in the 128-bit lane of the third vector register.

In some embodiments, the 8-bit data elements of the first and second matrices may each be bfloat8 (BF8) data elements. In other embodiments, the 8-bit data elements of the first and second matrices may each be hfloat8 (HF8) data elements. In other embodiments, the 8-bit data elements of the first matrix may each be bfloat8 (BF8) data elements and the 8-bit data elements of the first matrix may each be hfloat8 (HF8) data elements. In other embodiments, the 8-bit data elements of the first matrix may each be hfloat8 (HF8) data elements and the 8-bit data elements of the first matrix may each be bfloat8 (BF8) data elements. In any of the above embodiments of this paragraph, the 32-bit data elements of the third and fourth matrices may each be single precision floating-point (F32) data elements.

In still other embodiments, the 8-bit data elements of the first and second matrices may each be 8-bit signed integer (S8) data elements. In other embodiments, the 8-bit data elements of the first and second matrices may each be 8-bit unsigned integer (U8) data elements. In other embodiments, the 8-bit data elements of the first matrix may each be 8-bit signed integer (S8) data elements and the 8-bit data elements of the first matrix may each be 8-bit unsigned integer (U8) data elements. In other embodiments, the 8-bit data elements of the first matrix may each be8-bit unsigned integer (U8) data elements and the 8-bit data elements of the first matrix may each be 8-bit signed integer (S8) data elements. In any of the above embodiments of this paragraph, the 32-bit data elements of the third and fourth matrices may each be 32-bit signed integer (int32) data elements. In some embodiments each vector register may optionally include more than one 128-bit lane (e.g., two, four, eight, or some other number of 128-bit lanes) with each 128-bit lane storing a respective matrix and the operations may further include performing a separate multiplication and accumulation operation similar to the one described on these different lanes of matrices. In some embodiments, the vector packed matrix multiplication and accumulation instruction 401 may be any one of the VPMMUUBD, VPMMSSBD, VPMMUSBD, VPMMSUBD, VMMBF8PS, VMMHF8PS, VMMBHF8PS, and VMMHBF8PS instructions described further below, and the execution circuitry may perform any of the operations described for any one of these instructions further below.

Described below are example embodiments of instructions. These instructions are labeled as VMMTF32PS, VMM[BF16,F16]PS, VPMM[UU,SS,US,SU]BD, and VMM[B,H,BH,HB]F8PS. In some embodiments, VMM[BF16,F16]PS may be two separate instructions (e.g., one instruction for BF16 and another instruction for F16), whereas in other embodiments it may be one instruction with an immediate, field, or operand to select or indicate one of BF16 and F16. Likewise, in some embodiments, VPMM[UU,SS,US,SU]BD may be four separate instructions (e.g., one instruction for each of UU, SS, US, and SU), whereas in other embodiments it may be one instruction with an immediate, field, or operand to select or indicate one of ULT, SS, US, and SU. Similarly, in some embodiments, VMM[B,H,BH,HB]F8PS may be four separate instructions (e.g., one instruction for each of B, H, BH, and HB), whereas in other embodiments it may be one instruction with an immediate, field, or operand to select or indicate one of B, H, BH, and HB.

In the pseudocode below, "src1" designates a first source operand, "src2" designates a second source operand, "DEST" designates a destination operand, "srcdest" designates a source operand that is implicitly reused as a destination operand, and "TMP" designates a temporary value produced during the operation. Further, "xmm," "ymm," and "zmm," respectively designates 128-bit, 256-bit, and 512-bit registers in the x86 instruction set architecture (ISA). These broadly represent 128-bit, 256-bit, and 512-bit registers. "ModRM:reg(r,w)," "ModRM: 11:rrr:bbb," "VEX.vvvv(r)," and "ModRM:reg(r)" designate operand addressing modes used in the x86 ISA. The first two set bits "11" of ModRM: 11:rrr:bbb designates register/register access in cases where operands are optionally only allowed to be in registers not memory, which is not required for other embodiments. "VL" (e.g., as in "VL=128") designates a vector length, whereas "KL" designates a number of 128-bit segments lanes in the vector of vector length VL. The "FOR" (e.g., as in "FOR n := 0 to x") designates the beginning of a loop over a certain number of iterations (e.g., x+1 iterations). The symbol ":=" designates to assign the value on the right-hand side to the variable on the left-hand side. The notation "[x:0]" designates a range of bit positions. For example, "src1[127:0]" designates the bit positions of bits 0 to 127 of src1, the [31:0] in "TMP1.fp32[31:0]" designates bits 0 to 31 of TMP1.fp32, and so on. The asterisk "*" symbol designates multiplication. Two backslashes "//" precede a comment about the pseudocode. The "RET" designates a return (e.g., storage of a destination operand to the destination register).

Also, in the pseudocode below, the following designate how data elements are accessed or addressed: (1) .128b designates interpreting vector elements as 128 bits wide; (2) .fp32 designates interpreting a vector element as a F32 (float32) value; (3) .tf32 designates interpreting a vector element as a TF32 (tensor-float32) value; (4) .bf16 designates interpreting a vector element as a BF16 (bfloat16) value; (5) .fp16 designates interpreting a vector element as a F16 (float16) value; (6) .bf8 designates interpreting a vector element as a BF8 (bfloat8) value; (7) .hf8 designates interpreting a vector element as an HF8 (hfloat8) value; (8) .i32 designates interpreting a vector element as an I32 (signed int32) value; (9) .s8 designates interpreting a vector element as an S8 (signed int8) value; and (10) .u8 designates interpreting a vector element as a U8 (unsigned int8) value.

**VMMTF32PS Instruction:** One or more 128-bit lanes of packed TF32 small matrix multiplication: Each 128-bit lane in src1 and src2 is interpreted as a 2x2 (A) or 2x2 (B) matrix, and the A and B matrices in the corresponding 128-bit lanes are matrix multiplied with each other. The result is a 2x2 intermediate matrix in FP32 whose elements are added with the corresponding elements of the accumulation matrix in the srcdest.
VL=128 VMMTF32PS xmm1, xmm2, xmm3
VL=256 VMMTF32PS ymm1, ymm2, ymm3
VL=512 VMMTF32PS zmm1, zmm2, zmm3
Operand 1: ModRM:reg(r,w)
Operand 2: VEX.vvvv(r)
Operand 3: ModRM:reg(r)

**VMMTF32PS dest, src1, src2** VL=(128,256,512)
KL=VL/128
FOR i := 0 to KL-1:
   TMP[127:0] := tf32fp32_2x2x2_matmul(src1.128b[i], src2.128b[i])
FORj := 0 to 3:
   dest.fp32[i*4 + j] := dest.fp32[i*4 + j] + TMP.fp32[j]
DEST[MAX_VL-1:VL] := 0

**Pseudocode Operation tf32fp32_2x2x2_matmul(src1[127:0], src2[127:0])**
DEST[127:0] = 0
FOR n := 0 to 1:
   FORm := 0 to 1:
   P0[31:0] := TF32FP32Mul(src1.tf32[m*2+0], src2.tf32[n*2+0])
   P1[31:0] := TF32FP32Mul(src1.tf32[m*2+1], src2.tf32[n*2+1])
DEST.fp32[m*2+n] := P0.fp32[31:0] + P1.fp32[31:0];
RET DEST

**TF32FP32Mul** represents a scalar multiplication of two TF32 elements to generate FP32 product. In some embodiments, the source data elements may optionally be converted to larger (e.g., higher-precision) data elements (e.g., 32-bit single-precision floating-point data elements). The operation may also implement floating-point rounding as needed, handle denormals (e.g., whether to FTZ, whether to DAZ) as needed, propagate NaN and infinity as needed.

**VMM[BF16/F16]PS Instructions:** One or more 128-bit lanes of packed BF16 and/or FP16 small matrix multiplication: Each 128-bit lane in src1 and src2 is interpreted as a 2x4 (A) or 4x2 (B) matrix, and the A and B matrices in the corresponding 128-bit lanes are matrix multiplied with each other. The result is an intermediate 2x2 matrix in FP32 whose elements are added with the corresponding elements of the accumulation matrix in the srcdest.
VL=128 VMM[BF16/F16]PS xmm1, xmm2, xmm3
VL=256 VMM[BF16/F16]PS ymm1, ymm2, ymm3
VL=512 VMM[BF16/F16]PS zmm1, zmm2, zmm3
Operand 1: ModRM:reg(r,w)
Operand 2: c(r)
Operand 3: ModRM:reg(r)

**VMMBF16PS dest, src1, src2**
VL=(128,256,512)
KL=VL/128
FOR i := 0 to KL-1:
   TMP[127:0] := bf16fp32_2x2x4_matmul(src1.128b[i], src2.128b[i])
FORj := 0 to 3:
   dest.fp32[i*4 + j] := dest.fp32[i*4 + j] + TMP.fp32[j]
DEST[MAX_VL-1:VL] := 0

**Pseudocode Operation bf16fp32_2x2x4_matmul(src1[127:0], src2[127:0])**
DEST[127:0] = 0
FOR n := 0 to 1:
FORm := 0 to 1:
   P0[31:0] := BF16FP32Mul(src1.bf16[m*4+0], src2.bf16[n*4+0])
   P1[31:0] := BF16FP32Mul(src1.bf16[m*4+1], src2.bf16[n*4+1])
   P2[31:0] := BF16FP32Mul(src1.bf16[m*4+2], src2.bf16[n*4+2])
   P3[31:0] := BF16FP32Mul(src1.bf16[m*4+3], src2.bf16[n*4+3])
   TMP0[31:0] = P0.fp32[31:0] + P2.fp32[31:0];
   TMP1[31:0] = P1.fp32[31:0] + P3.fp32[31:0];
   DEST.fp32[m*2+n] := TMP0.fp32[31:0] + TMP1.fp32[31:0];
RET DEST

**BF16FP32Mul** represents a scalar multiplication of two BF16 elements to generate FP32 product. In some embodiments, the source data elements may optionally be converted to larger (e.g., higher-precision) data elements (e.g., 32-bit single-precision floating-point data elements). The operation may also implement floating-point rounding as needed, handle denormals (e.g., whether to FTZ, whether to DAZ) as needed, propagate NaN and infinity as needed.

**VMMF16PS dest, src1, src2**
VL=(128,256,512) KL=VL/128
FOR i := 0 to KL-1:
   TMP[127:0] := f16fp32_2x2x4_matmul(src1.128b[i], src2.128b[i])
   FORj := 0 to 3:
   dest.fp32[i*4 + j] := dest.fp32[i*4 + j] + TMP.fp32[j]
DEST[MAX_VL-1:VL] := 0

**Pseudocode Operation f16fp32_2x2x4_matmul(src1[127:0], src2[127:0])**
DEST[127:0] = 0 FOR n := 0 to 1:
FORm := 0 to 1:
   P0[31:0] := F16FP32Mul(src1.f16[m*4+0], src2.f16[n*4+0])
   P1[31:0] := F16FP32Mul(src1.f16[m*4+1], src2.f16[n*4+1])
   P2[31:0] := F16FP32Mul(src1.f16[m*4+2], src2.f16[n*4+2])
   P3[31:0] := F16FP32Mul(src1.f16[m*4+3], src2.f16[n*4+3])
   TMP0[31:0] = P0.fp32[31:0] + P2.fp32[31:0];
   TMP1[31:0] = P1.fp32[31:0] + P3.fp32[31:0];
   DEST.fp32[m*2+n] := TMP0.fp32[31:0] + TMP1.fp32[31:0];
RET DEST

**F16FP32Mul** represents a scalar multiplication of two FP16 elements to generate FP32 product. In some embodiments, the source data elements may optionally be converted to larger (e.g., higher-precision) data elements (e.g., 32-bit single-precision floating-point data elements). The operation may also implement floating-point rounding as needed, handle denormals (e.g., whether to FTZ, whether to DAZ) as needed, propagate NaN and infinity as needed.

**VPMM[UU/SS/US/SU]BD Instructions:** One or more 128-bit lanes of packed unsigned-unsigned, signed-signed, unsigned-signed, or signed-unsigned 8-bit integer small matrix multiplication: Each 128-bit lane in src1 and src2 is interpreted as a 2x8 (A) or 8x2 (B) matrix, and the A and B matrices in the corresponding 128-bit lanes are matrix multiplied with each other. A and B can be either signed or unsigned int8. The result is an intermediate 2x2 matrix in int32 whose elements are added with the corresponding elements of the accumulation matrix in the srcdest.
VL=128 VPMM[UU/SS/US/SU]BD xmm1, xmm2, xmm3
VL=256 VPMM[UU/SS/US/SU]BD ymm1, ymm2, ymm3
VL=512 VPMM[UU/SS/US/SU]BD zmm1, zmm2, zmm3
Operand 1: ModRM:reg(r,w)
Operand 2: VEX.vvvv(r)
Operand 3: ModRM:reg(r)

**VPMMUUBD dest, src1, src2**
VL=(128,256,512)
KL=VL/128
FOR i := 0 to KL-1:
   TMP[127:0] := uu8i32_2x2x8_matmul(src1.128b[i], src2.128b[i])
   FORj := 0 to 3:
   dest.i32[i*4 + j] := dest.i32[i*4 + j] + TMP.i32[j]
DEST[MAX_VL-1:VL] := 0

**Pseudocode Operation uu8i32_2x2x8_matmul(src1[127:0], src2[127:0])**
DEST[127:0] = 0
FOR n := 0 to 1:
FORm := 0 to 1:
   P0[31:0] := UU8I32Mul(src1.u8[m*8+0], src2.u8[n*8+0])
   P1[31:0] := UU8I32Mul(src1.u8[m*8+1], src2.u8[n*8+1])
   P2[31:0] := UU8I32Mul(src1.u8[m*8+2], src2.u8[n*8+2])
   P3[31:0] := UU8I32Mul(src1.u8[m*8+3], src2.u8[n*8+3])
   P4[31:0] := UU8I32Mul(src1.u8[m*8+4], src2.u8[n*8+4])
   P5[31:0] := UU8I32Mul(src1.u8[m*8+5], src2.u8[n*8+5])
   P6[31:0] := UU8I32Mul(src1.u8[m*8+6], src2.u8[n*8+6])
   P7[31:0] := UU8I32Mul(src1.u8[m*8+7], src2.u8[n*8+7])
// no order required since non-saturating addition (e.g., FP8 order)
DEST.i32[m*2+n] := int32_reduce_nonsat( P0, P1, P2, P3, P4, P5, P6, P7 )

**UU8I32Mul** represents a scalar multiplication of two U8 elements to generate I32 product. In some embodiments, the source data elements may optionally be converted to larger (e.g., higher-precision) data elements (e.g., 32-bit integer data elements).

**VPMMSSBD dest, src1, src2**
VL=(128,256,512) KL=VL/128
FOR i := 0 to KL-1:
   TMP[127:0] := ss8i32_2x2x8_matmul(src1.128b[i], src2.128b[i])
   FORj := 0 to 3:
   dest.i32[i*4 + j] := dest.i32[i*4 + j] + TMP.i32[j]
DEST[MAX_VL-1:VL] := 0

**Pseudocode Operation ss8i32_2x2x8_matmul(src1[127:0], src2[127:0])**
DEST[127:0] = 0
FOR n := 0 to 1:
FORm := 0 to 1:
   P0[31:0] := SS8I32Mul(src1.s8[m*8+0], src2.s8[n*8+0])
   P1[31:0] := SS8I32Mul(src1.s8[m*8+1], src2.s8[n*8+1])
   P2[31:0] := SS8I32Mul(src1.s8[m*8+2], src2.s8[n*8+2])
   P3[31:0] := SS8I32Mul(src1.s8[m*8+3], src2.s8[n*8+3])
   P4[31:0] := SS8I32Mul(src1.s8[m*8+4], src2.s8[n*8+4])
   P5[31:0] := SS8I32Mul(src1.s8[m*8+5], src2.s8[n*8+5])
   P6[31:0] := SS8I32Mul(src1.s8[m*8+6], src2.s8[n*8+6])
   P7[31:0] := SS8I32Mul(src1.s8[m*8+7], src2.s8[n*8+7])
// no order required since non-saturating addition (e.g., FP8 order)
DEST.i32[m*2+n] := int32_reduce_nonsat( P0, P1, P2, P3, P4, P5, P6, P7 )

**SS8I32Mul** represents a scalar multiplication of two S8 elements to generate I32 product. In some embodiments, the source data elements may optionally be converted to larger (e.g., higher-precision) data elements (e.g., 32-bit integer data elements).

**VPMMUSBD dest, src1, src2**
VL=(128,256,512) KL=VL/128
FOR i := 0 to KL-1:
   TMP[127:0] := us8i32_2x2x8_matmul(src1.128b[i], src2.128b[i])
   FORj := 0 to 3:
   dest.i32[i*4 + j] := dest.i32[i*4 + j] + TMP.i32[j]
DEST[MAX_VL-1:VL] := 0

**Pseudocode Operation us8i32_2x2x8_matmul(src1[127:0], src2[127:0])**
DEST[127:0] = 0
FOR n := 0 to 1:
FORm := 0 to 1:
   P0[31:0] := US8I32Mul(src1.u8[m*8+0], src2.s8[n*8+0])
   P1[31:0] := US8I32Mul(src1.u8[m*8+1], src2.s8[n*8+1])
   P2[31:0] := US8I32Mul(src1.u8[m*8+2], src2.s8[n*8+2])
   P3[31:0] := US8I32Mul(src1.u8[m*8+3], src2.s8[n*8+3])
   P4[31:0] := US8I32Mul(src1.u8[m*8+4], src2.s8[n*8+4])
   P5[31:0] := US8I32Mul(src1.u8[m*8+5], src2.s8[n*8+5])
   P6[31:0] := US8I32Mul(src1.u8[m*8+6], src2.s8[n*8+6])
   P7[31:0] := US8I32Mul(src1.u8[m*8+7], src2.s8[n*8+7])
// no order required since non-saturating addition (e.g., FP8 order)
DEST.i32[m*2+n] := int32_reduce_nonsat( P0, P1, P2, P3, P4, P5, P6, P7 )

**US8I32Mul** represents a scalar multiplication of U8 and S8 elements to generate I32 product. In some embodiments, the source data elements may optionally be converted to larger (e.g., higher-precision) data elements (e.g., 32-bit integer data elements).

**VPMMSUBD dest, src1, src2**
VL=(128,256,512)
KL=VL/128
FOR i := 0 to KL-1:
   TMP[127:0] := su8i32_2x2x8_matmul(src1.128b[i], src2.128b[i])
   FORj := 0 to 3:
   dest.i32[i*4 + j] := dest.i32[i*4 + j] + TMP.i32[j]
DEST[MAX_VL-1:VL] := 0

**Pseudocode Operation su8i32_2x2x8_matmul(src1[127:0], src2[127:0])**
DEST[127:0] = 0 FOR n := 0 to 1:
FORm := 0 to 1:
   P0[31:0] := SU8I32Mul(src1.s8[m*8+0], src2.u8[n*8+0])
   P1[31:0] := SU8I32Mul(src1.s8[m*8+1], src2.u8[n*8+1])
   P2[31:0] := SU8I32Mul(src1.s8[m*8+2], src2.u8[n*8+2])
   P3[31:0] := SU8I32Mul(src1.s8[m*8+3], src2.u8[n*8+3])
   P4[31:0] := SU8I32Mul(src1.s8[m*8+4], src2.u8[n*8+4])
   P5[31:0] := SU8I32Mul(src1.s8[m*8+5], src2.u8[n*8+5])
   P6[31:0] := SU8I32Mul(src1.s8[m*8+6], src2.u8[n*8+6])
   P7[31:0] := SU8I32Mul(src1.s8[m*8+7], src2.u8[n*8+7])
// no order required since non-saturating addition (e.g., FP8 order)
DEST.i32[m*2+n] := int32_reduce_nonsat( P0, P1, P2, P3, P4, P5, P6, P7 )

**SU8I32Mul** represents a scalar multiplication of S8 and U8 elements to generate I32 product. In some embodiments, the source data elements may optionally be converted to larger (e.g., higher-precision) data elements (e.g., 32-bit integer data elements).

**VMM[B/H/BH/HB]F8PS Instructions:** One or more 128-bit lanes of packed 8-bit floating-point small matrix multiplication: Each 128-bit lane in src1 and src2 is interpreted as a 2x8 (A) or 8x2 (B) matrix, and the A and B matrices in the corresponding 128-bit lanes are matrix multiplied with each other. The A and B matrices can independently of the other have either BF8 (also known as E5M2 having five exponent bits and two explicit mantissa bits) elements or HF8 (also known as E4M3 having four exponent bits and three explicit significand bits) elements. The result is an intermediate 2x2 matrix in FP32 whose elements are added with the corresponding elements of the accumulation matrix in the srcdest. VL=128 VMM[B/H/BH/HB]F8PS xmm1, xmm2, xmm3 VL=256 VMM[B/H/BH/HB]F8PS ymm1, ymm2, ymm3 VL=512 VMM[B/H/BH/HB]F8PS zmm1, zmm2, zmm3 Operand 1: ModRM:reg(r,w) Operand 2: VEX.vvvv(r) Operand 3: ModRM:reg(r)

**VMMBF8PS dest, src1, src2** VL=(128,256,512) KL=VL/128 FOR i := 0 to KL-1: TMP[127:0] := bf8fp32_2x2x8_matmul(src1.128b[i], src2.128b[i]) FORj := 0 to 3: dest.fp32[i*4 + j] := dest.fp32[i*4 + j] + TMP.fp32[j] DEST[MAX_VL-1:VL] := 0

**Pseudocode Operation bf8fp32_2x2x8_matmul(src1[127:0], src2[127:0])**
DEST[127:0] = 0
FOR n := 0 to 1:
FORm := 0 to 1:
   P0e.fp32[31:0] := BF8FP32Mul(src1.bf8[m*8+0], src2.bf8[n*8+0])
   P0o.fp32[31:0] := BF8FP32Mul(src1.bf8[m*8+1], src2.bf8[n*8+1])
   P1e.fp32[31:0] := BF8FP32Mul(src1.bf8[m*8+2], src2.bf8[n*8+2])
   P1o.fp32[31:0] := BF8FP32Mul(src1.bf8[m*8+3], src2.bf8[n*8+3])
   P2e.fp32[31:0] := BF8FP32Mul(src1.bf8[m*8+4], src2.bf8[n*8+4])
   P2o.fp32[31:0] := BF8FP32Mul(src1.bf8[m*8+5], src2.bf8[n*8+5])
   P3e.fp32[31:0] := BF8FP32Mul(src1.bf8[m*8+6], src2.bf8[n*8+6])
   P3o.fp32[31:0] := BF8FP32Mul(src1.bf8[m*8+7], src2.bf8[n*8+7])
// Column Horizontal Reductions
   TMP0e.fp32[31:0] := P0e.fp32[31:0] + P0o.fp32[31:0];
   TMP0o.fp32[31:0] := P1e.fp32[31:0] + P1o.fp32[31:0];
   TMP1e.fp32[31:0] := P2e.fp32[31:0] + P2o.fp32[31:0];
   TMP1o.fp32[31:0] := P3e.fp32[31:0] + P3o.fp32[31:0];
// Vertical Reduction
   TMP0.fp32[31:0] := TMP0e.fp32[31:0] + TMP1e.fp32[31:0];
   TMP1.fp32[31:0] := TMP0o.fp32[31:0] + TMP1o.fp32[31:0];
// Horizontal Reduction
   DEST.fp32[m*2+n] := TMP0.fp32[31:0] + TMP1.fp32[31:0];
RET DEST

**BF8FP32Mul** represents a scalar multiplication of two BF8 elements to generate FP32 product. In some embodiments, the source data elements may optionally be converted to larger (e.g., higher-precision) data elements (e.g., 32-bit single-precision floating-point data elements). The operation may also implement floating-point rounding as needed, handle denormals (e.g., whether to FTZ, whether to DAZ) as needed, propagate NaN and infinity as needed.

**VMMHF8PS dest, src1, src2**
VL=(128,256,512) KL=VL/128
FOR i := 0 to KL-1:
   TMP[127:0] := hf8fp32_2x2x8_matmul(src1.128b[i], src2.128b[i])
FORj := 0 to 3:
   dest.fp32[i*4 + j] := dest.fp32[i*4 + j] + TMP.fp32[j]
DEST[MAX_VL-1:VL] := 0

**Pseudocode Operation hf8fp32_2x2x8_matmul(src1[127:0], src2[127:0])**
DEST[127:0] = 0
FOR n := 0 to 1:
FORm := 0 to 1:
   P0e.fp32[31:0] := HF8FP32Mul(src1.hf8[m*8+0], src2.hf8[n*8+0])
   P0o.fp32[31:0] := HF8FP32Mul(src1.hf8[m*8+1], src2.hf8[n*8+1])
   P1e.fp32[31:0] := HF8FP32Mul(src1.hf8[m*8+2], src2.hf8[n*8+2])
   P1o.fp32[31:0] := HF8FP32Mul(src1.hf8[m*8+3], src2.hf8[n*8+3])
   P2e.fp32[31:0] := HF8FP32Mul(src1.hf8[m*8+4], src2.hf8[n*8+4])
   P2o.fp32[31:0] := HF8FP32Mul(src1.hf8[m*8+5], src2.hf8[n*8+5])
   P3e.fp32[31:0] := HF8FP32Mul(src1.hf8[m*8+6], src2.hf8[n*8+6])
   P3o.fp32[31:0] := HF8FP32Mul(src1.hf8[m*8+7], src2.hf8[n*8+7])
   // Column Horizontal Reductions TMP0e.fp32[31:0] := P0e.fp32[31:0] + P0o.fp32[31:0]; TMP0o.fp32[31:0] := P1e.fp32[31:0] + P1o.fp32[31:0]; TMP1e.fp32[31:0] := P2e.fp32[31:0] + P2o.fp32[31:0]; TMP1o.fp32[31:0] := P3e.fp32[31:0] + P3o.fp32[31:0]; // Vertical Reduction TMP0.fp32[31:0] := TMP0e.fp32[31:0] + TMP1e.fp32[31:0]; TMP1.fp32[31:0] := TMP0o.fp32[31:0] + TMP1o.fp32[31:0]; // Horizontal Reduction DEST.fp32[m*2+n] := TMP0.fp32[31:0] + TMP1.fp32[31:0]; RET DEST

**HF8FP32Mul** represents a scalar multiplication of two HF8 elements to generate FP32 product. In some embodiments, the source data elements may optionally be converted to larger (e.g., higher-precision) data elements (e.g., 32-bit single-precision floating-point data elements). The operation may also implement floating-point rounding as needed, handle denormals (e.g., whether to FTZ, whether to DAZ) as needed, propagate NaN and infinity as needed.

**VMMBHF8PS dest, src1, src2** VL=(128,256,512) KL=VL/128 FOR i := 0 to KL-1: TMP[127:0] := bhf8fp32_2x2x8_matmul(src1.128b[i], src2.128b[i]) FORj := 0 to 3: dest.fp32[i*4 + j] := dest.fp32[i*4 + j] + TMP.fp32[j] DEST[MAX_VL-1:VL] := 0

**Pseudocode Operation bhf8fp32_2x2x8_matmul(src1[127:0], src2[127:0])** DEST[127:0] = 0 FOR n := 0 to 1: FORm := 0 to 1: P0e.fp32[31:0] := BHF8FP32Mul(src1.bf8[m*8+0], src2.hf8[n*8+0]) P0o.fp32[31:0] := BHF8FP32Mul(src1.bf8[m*8+1], src2.hf8[n*8+1]) P1e.fp32[31:0] := BHF8FP32Mul(src1.bf8[m*8+2], src2.hf8[n*8+2]) P1o.fp32[31:0] := BHF8FP32Mul(src1.bf8[m*8+3], src2.hf8[n*8+3]) P2e.fp32[31:0] := BHF8FP32Mul(src1.bf8[m*8+4], src2.hf8[n*8+4]) P2o.fp32[31:0] := BHF8FP32Mul(src1.bf8[m*8+5], src2.hf8[n*8+5]) P3e.fp32[31:0] := BHF8FP32Mul(src1.bf8[m*8+6], src2.hf8[n*8+6]) P3o.fp32[31:0] := BHF8FP32Mul(src1.bf8[m*8+7], src2.hf8[n*8+7]) // Column Horizontal Reductions TMP0e.fp32[31:0] := P0e.fp32[31:0] + P0o.fp32[31:0]; TMP0o.fp32[31:0] := P1e.fp32[31:0] + P1o.fp32[31:0]; TMP1e.fp32[31:0] := P2e.fp32[31:0] + P2o.fp32[31:0]; TMP1o.fp32[31:0] := P3e.fp32[31:0] + P3o.fp32[31:0]; // Vertical Reduction TMP0.fp32[31:0] := TMP0e.fp32[31:0] + TMP1e.fp32[31:0]; TMP1.fp32[31:0] := TMP0o.fp32[31:0] + TMP1o.fp32[31:0]; // Horizontal Reduction DEST.fp32[m*2+n] := TMP0.fp32[31:0] + TMP1.fp32[31:0]; RET DEST

**BHF8FP32Mul** represents a scalar multiplication of BF8 and HF8 elements to generate FP32 product. In some embodiments, the source data elements may optionally be converted to larger (e.g., higher-precision) data elements (e.g., 32-bit single-precision floating-point data elements). The operation may also implement floating-point rounding as needed, handle denormals (e.g., whether to FTZ, whether to DAZ) as needed, propagate NaN and infinity as needed.

**VMMHBF8PS dest, src1, src2** VL=(128,256,512) KL=VL/128 FOR i := 0 to KL-1: TMP[127:0] := hbf8fp32_2x2x8_matmul(src1.128b[i], src2.128b[i]) FORj := 0 to 3: dest.fp32[i*4 + j] := dest.fp32[i*4 + j] + TMP.fp32[j] DEST[MAX_VL-1:VL] := 0

**Pseudocode Operation hbf8fp32_2x2x8_matmul(src1[127:0], src2[127:0])** DEST[127:0] = 0 FOR n := 0 to 1: FORm := 0 to 1: P0e.fp32[31:0] := HBF8FP32Mul(src1.hf8[m*8+0], src2.bf8[n*8+0]) P0o.fp32[31:0] := HBF8FP32Mul(src1.hf8[m*8+1], src2.bf8[n*8+1]) P1e.fp32[31:0] := HBF8FP32Mul(src1.hf8[m*8+2], src2.bf8[n*8+2]) P1o.fp32[31:0] := HBF8FP32Mul(src1.hf8[m*8+3], src2.bf8[n*8+3]) P2e.fp32[31:0] := HBF8FP32Mul(src1.hf8[m*8+4], src2.bf8[n*8+4]) P2o.fp32[31:0] := HBF8FP32Mul(src1.hf8[m*8+5], src2.bf8[n*8+5]) P3e.fp32[31:0] := HBF8FP32Mul(src1.hf8[m*8+6], src2.bf8[n*8+6]) P3o.fp32[31:0] := HBF8FP32Mul(src1.hf8[m*8+7], src2.bf8[n*8+7]) // Column Horizontal Reductions TMP0e.fp32[31:0] := P0e.fp32[31:0] + P0o.fp32[31:0]; TMP0o.fp32[31:0] := P1e.fp32[31:0] + P1o.fp32[31:0]; TMP1e.fp32[31:0] := P2e.fp32[31:0] + P2o.fp32[31:0]; TMP1o.fp32[31:0] := P3e.fp32[31:0] + P3o.fp32[31:0]; // Vertical Reduction TMP0.fp32[31:0] := TMP0e.fp32[31:0] + TMP1e.fp32[31:0]; TMP1.fp32[31:0] := TMP0o.fp32[31:0] + TMP1o.fp32[31:0]; // Horizontal Reduction DEST.fp32[m*2+n] := TMP0.fp32[31:0] + TMP1.fp32[31:0]; RET DEST

**HBF8FP32Mul** represents a scalar multiplication of HF8 and BF8 elements to generate FP32 product. In some embodiments, the source data elements may optionally be converted to larger (e.g., higher-precision) data elements (e.g., 32-bit single-precision floating-point data elements). The operation may also implement floating-point rounding as needed, handle denormals (e.g., whether to FTZ, whether to DAZ) as needed, propagate NaN and infinity as needed.

It is to be appreciated that, for each of the specific instructions described above, the particular order of accumulation of products of the matrix multiplication and their accumulation with the accumulation value from the source/destination matrix is not required. Each of the specific instructions described above indicates one possible order for such additions/accumulations, but that specific order is only one example and is not required. For each instruction, multiple if not many other orders are also possible. Floating-point additions are not strictly associative. As a result, slightly different results may be achieved when the floating-point additions are performed in different order, which is why one particular example order is specified in the architectural description of these instructions. However, many variations of the instructions are contemplated where the orders are altered in various different ways. By way of example, for the bf8fp32_2x2x78_matmul operation, the illustrated embodiment does column horizontal reductions, vertical reduction, and then horizontal reduction, although this is not required. In other embodiments, many other orders of addition may optionally be used (e.g., P0e.fp32[31:0] may be added with P1e.fp32[31:0] to form a temporary value, P0e.fp32[31:0] may be added with P2e.fp32[31:0] to form a temporary value, P0e.fp32[31:0] may be added with P20.fp32[31:0] to form a temporary value, the temporary values may be added in different order, and so on.

In some embodiments, the accumulation may be performed "late" in that accumulation of the products with the accumulation value and/or the register used to hold the accumulation value is performed only after all multiplications have been performed. In some embodiments, all products are accumulated with the accumulation value after all products have been generated. Another possible approach could be to access the accumulation value and/or the register used to hold the accumulation value sequentially two or more times, including once after one portion (e.g., half) of the multiplications have been performed, and again after another portion (e.g., half) of the multiplications have been performed. Possible advantages of such "late" accumulation is that it may help with latency characteristics and/or improve numerical result quality. Due to late accumulation, only the final result may be exposed to the out-of-order (OoO) machine's scheduler. Also, resetting the running accumulator (e.g., as may be done for late accumulation) may tend to improve the overall result quality as rounding errors (which may be encountered in floating points) may tend to be reduced.

In some embodiments, one or more or each of the instructions disclosed above may have one or more optional attributes as will be described next to achieve some advantage (e.g., improve performance, simplify the implementation, make the instruction better for certain types of workloads, etc.). One area in which such simplifications may be made is in handling of floating-point numbers. These simplifications only apply to the instructions that operate on floating-point data elements not the instructions that operate on integers.

In some embodiments, the processor may have an MXCSR, floating-point control and/or status register, or other register to control floating-point operations. In some embodiments, the register may have one or more fields (e.g., rounding mode field) to specify one of a plurality of supported rounding modes to be used for floating-point operations. In some embodiments, one or more or each of the instructions disclosed above may control that rounding is to be performed according to only a single rounding mode (e.g., a round to nearest even rounding mode in some cases) regardless of and/or irrespective of and/or without checking the one or more fields (e.g., the rounding mode field) in the register. In some such embodiments, the rounding may be performed according to the single rounding mode in a mathematically precise way rather than through a simplification which leads to mathematically imprecise results.

In some embodiments, the MXCSR, floating-point control and/or status register, or other register to control floating-point operations may have one or more fields (e.g., a Flush-To-Zero (FTZ) bit or field) to specify to specify whether denormal results of floating-point operations are to be set, forced, or made to be zero. In some such embodiments, one or more or each of the instructions disclosed above may control or cause the processor to set, force, or make denormal results of floating-point operations are to be to be zero regardless of and/or irrespective of and/or without checking whether the one or more fields (e.g., the FTZ bit or field) in the register specify whether denormal results of floating-point operations are to be set, forced, or made to be zero.

In some embodiments, the MXCSR, floating-point control and/or status register, or other register to control floating-point operations may have one or more fields (e.g., a Denormals-Are-Zero (DAZ) bit or field) to specify whether denormal values in the inputs to floating-point instructions/operations (e.g., the source matrices) are to be set or made to be or treated as zero. In some such embodiments, one or more or each of the instructions disclosed above may control or cause the processor to set or make denormals in the inputs to floating-point operations as zero or treat denormals in the inputs to floating-point operations as zero regardless of and/or irrespective of and/or without checking whether the one or more fields (e.g., the DAZ bit or field) in the register specify whether denormal results of floating-point operations are to be forced to zero. Alternatively, in other embodiments, the instructions that operate on FP16 and FP8 source floating-point data elements (e.g., the VMMF16PS, VMMBF8PS, VMMHF8PS, VMMBHF8PS, and VMMHBF8PS instructions) may optionally respect the DAZ bit or field in the register (e.g., not treat denormal values in inputs to floating-point operations as zero regardless of whether the one or more fields specify that denormal values in inputs to floating-point operations are to be treated as zero). One possible reason for turning off DAZ for FP16 and/or FP8 data element formats is that they have fewer exponent bits (e.g., smaller numeric ranges) such that it may be more appropriate to process denormal values in the inputs/sources rather than setting, making, or treating the denormal values in the inputs/sources as zero.

In some embodiments, the MXCSR, floating-point control and/or status register, or other register to control floating-point operations may have one or more fields to control whether or not floating-point instructions/operations report floating-point exceptions. In some such embodiments, one or more or each of the instructions disclosed above may control or cause the processor to not report floating-point exceptions regardless of and/or irrespective of and/or without checking whether the one or more fields in the register specify whether floating-point exceptions are to be reported. In some embodiments, the instructions may optionally cause the processor to propagate Not-a-Number (NaN) and/or infinity (Inf).

In some such embodiments, one or more or each of the instructions disclosed above may control or cause the processor to complete performance of the operations corresponding to the instruction without accessing (e.g., without reading from and without writing to) the MXCSR, floating-point control and/or status register, or other register to control floating-point operations.

While such floating-point characteristics may not be suitable for all workloads, some workloads may benefit from enhanced performance and/or a simpler implementation that may result from such floating-point characteristics. Strict compliance with floating-point standards and support for all variations of floating-point characteristics often come at a cost. Certain workloads (e.g., artificial intelligence) may not require that all these floating-point characteristics are supported by the instructions and may benefit more from higher performance and/or a simpler implementation.

In some embodiments, one or more or each of the instructions disclosed above may optionally only allow source and destination operands to be in registers not memory, although this is not required. In some embodiments, this may be the case even if the instruction is implemented in an ISA that is not a load-store ISA such that the ISA includes other data processing instructions that are able to specify and operate on operands in memory. By way of example, in the x86 ISA, the instructions may use ModRM: 11:rrr:bbb operand addressing mode. One possible reason to do this is to promote improved performance of executing the instruction (e.g., without the latency of memory operand access), which may be more beneficial for certain workloads than the need to access operands in memory. Another possible reason is to reduce the risk of side-channel attacks. However, in other embodiments, source matrices may optionally be allowed to be taken from memory.

In some embodiments, one or more or each of the instructions disclosed above may optionally only be allowed to operate in 64-bit mode (e.g., not in 32-bit mode), although this is not required. Supporting only the 64-bit mode may potentially help to improve performance (e.g., potentially allow access to a greater number of registers, potentially simplify the implementation (e.g., eliminate one or more checks), and so on). However, in other embodiments, the instructions may optionally be supported also in 32-bit mode.

In some embodiments, any one or more of the above-described characteristics may optionally be implicit to the instructions (e.g., implicit to their opcodes) such that the instructions are only able to have these characteristics. In other embodiments, any one or more of the above-described characteristics may optionally be configured or configurable for the instructions (e.g., their opcodes) such that the characteristic(s) may be configured or configurable (e.g., enabled or disabled) for the instructions. In some embodiments, the processor may have one or more bits, flags, or configurable controls (e.g., in a floating-point status and/or control register, in a model specific register (MSR), etc.) to store such configuration information. Each control may have a first value to specify whether the characteristic or an alternate characteristic is to be used. For example, one control may indicate whether the FTZ field is to be respected or overridden by the instruction, etc.

The detailed instructions described above represent specific examples of suitable instructions. However, many modifications to these instructions are possible. For example, the instructions above refer to the xmm, ymm, and zmm registers, which represent registers in the x86 ISA. In other embodiments, these xmm, ymm, and zmm registers may optionally be replaced by other 128-bit, 256-bit, or 512-bit registers in another non-x86 ISA. For example, the xmm, ymm, and zmm registers may optionally be replaced by scalable vector registers Z0-Z31 used in the Scalable Vector Extension (SVE) or SVE2 of the ARM architecture. Thus, other embodiments of the instructions above may broadly use 128-bit, 256-bit, or 512-bit registers or scalable vector registers in place of the xmm, ymm, and zmm registers shown in the examples above. In other embodiments, the instructions may also support different vector register sizes including different numbers of 128-bit lanes (e.g., 640-bit, 768-bit, 1024-bit, etc.). As another example, masking/predication optionally has not been used for these instructions, but in other embodiments masking/predication may optionally be used. As another example, some of the instructions above may use one or more of "ModRM:reg(r,w)", "ModRM: 11:rrr:bbb", "VEX.vvvv(r)", or "ModRM:reg(r)", which represent operand addressing modes specific to the instruction encoding format used in the x86 ISA. In other embodiments, these operand addressing modes may broadly represent operand addressing modes that may optionally be replaced by other operand addressing modes used by instruction encodings and/or in other non-x86 ISA. Further, the first two set bits "11" of ModRM: 11:rrr:bbb designates register/register access in cases where operands are optionally only allowed to be in registers not memory, but this is not required for other embodiments where a source operand may be sourced from memory. As yet another example, some of the instructions above refer to the MXCSR, which is a floating-point status and/or control register in the n x86 ISA. In other embodiments, the MXCSR may optionally be replaced by a floating-point status and/or control register in another non-x86 ISA. Thus, other embodiments of the instructions above may refer to another floating-point status and/or control register.

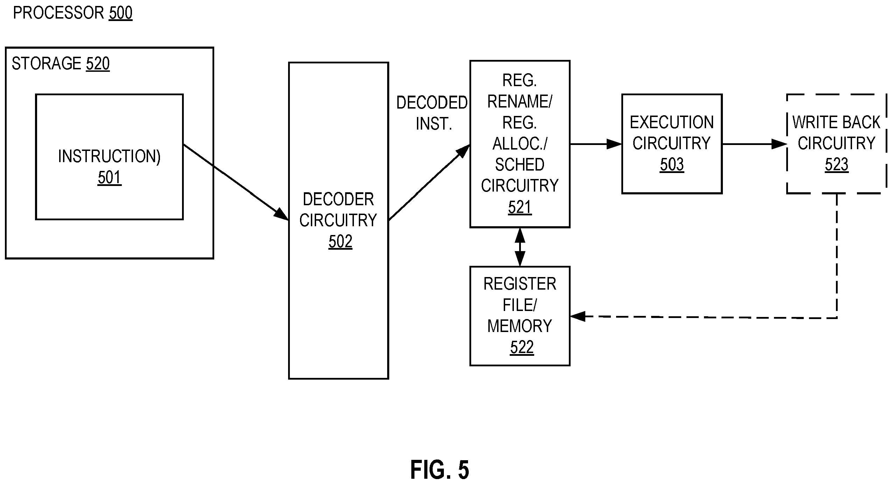

**FIG. 5** is a block diagram of a more detailed example embodiment of a processor 500 that is operative to perform an embodiment of an instruction 501 (e.g., the instruction 101 described for **FIG. 1**). The processor includes decoder circuitry 502 to decode the instruction, execution circuitry 503 to perform operations corresponding to the instruction, and registers and/or memory 522 to store matrices for the instruction. Aside from aspects related to the additional components of the processor 500, the instruction 501, the decoder circuitry 502, the execution circuitry 503, and the registers/memory 522 may optionally be the same as or similar to those already described for **FIG. 1****.** To avoid obscuring the description, the different and/or additional components and aspects of the embodiment of **FIG. 5** will primarily be described, without repeating aspects that may optionally be the same as or similar to those already described for **FIG. 1****.**

An optional storage 520 may be used to store the instruction 501. By way of example, the storage may be a cache (e.g., an instruction cache, a unified cache) or memory coupled with the processor. The decoder circuitry 502 may receive and decode the instruction as previously described. The decoder circuitry may optionally be coupled with the storage via an optional fetch circuitry (not shown) to receive the instruction.

In some examples, optional register renaming, register allocation, and/or scheduling circuitry 521 may provide functionality for one or more of (1) renaming logical operand values to physical operand values (e.g., a register alias table in some examples); (2) allocating status bits and flags to the decoded instruction; and (3) scheduling the decoded instruction for execution by execution circuitry out of an instruction pool (e.g., using a reservation station in some examples). The registers and/or memory 522 may store source and result matrices of the instruction as previously described.

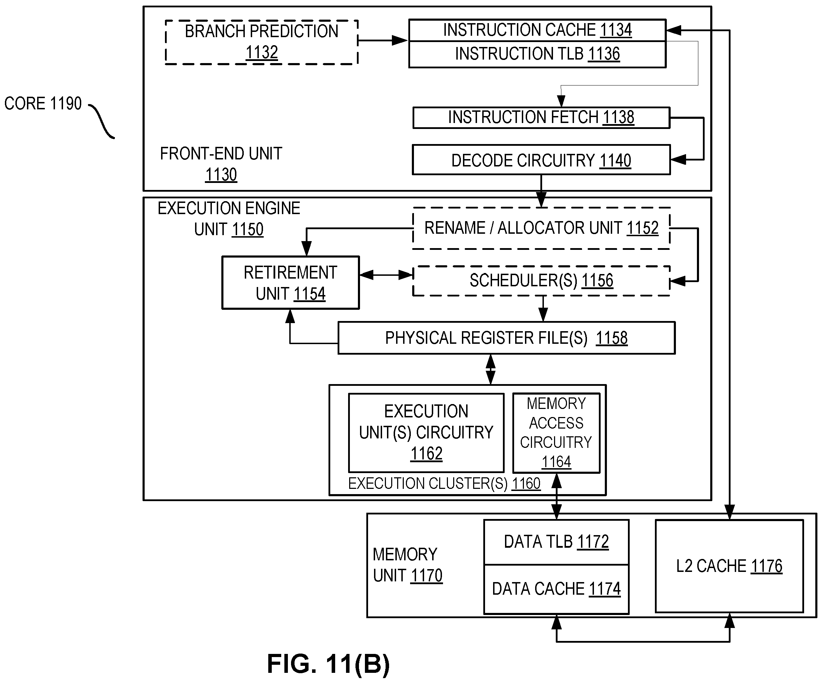

The execution circuitry 503 is coupled with the decoder circuitry 502 and the registers/memory 522 via the intervening register renaming, register allocation, and/or scheduling circuitry 521. The execution circuitry may perform operations corresponding to the instruction as previously described. One possible example of the execution circuitry is the execution cluster(s) 1160 shown in **FIG. 11(B)****.** Optional retirement/write back circuitry 523 may architecturally commit the destination register into the registers/memory 522 and commit the instruction.

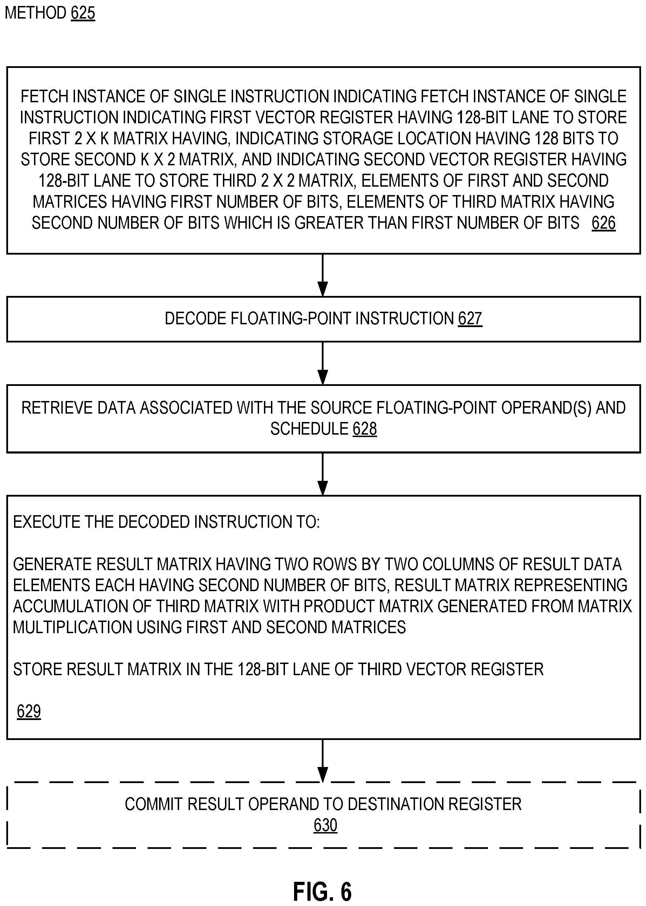

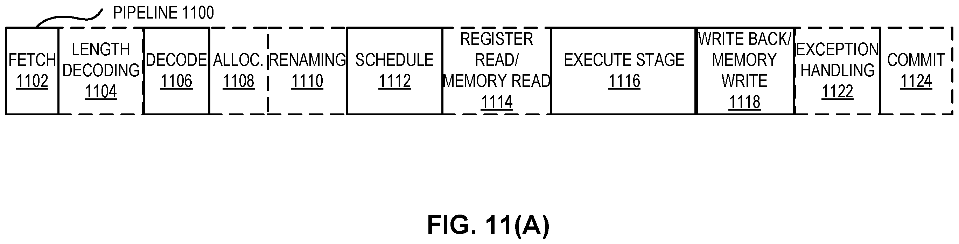

**FIG. 6** is a block flow diagram of an embodiment of a method 625 of performing an embodiment of a vector packed matrix multiplication and accumulation instruction. In various embodiments, the method may be performed by a processor, digital logic device, or integrated circuit. By way of example, the processors 100, 200, 300, 400, or 500, the processor core 1190 of **FIG. 11(B)****,** or a pipeline as described further below, may perform this method. The components, features, and specific optional details described herein for the processors 100, 200, 300, 400, or 500, the processor core 1190, or the pipeline 1100 may optionally apply to the method. Alternatively, the method 625 may be performed by a similar or different processor, core, or pipeline. Moreover, the processors 100, 200, 300, 400, or 500 may perform methods the same as, similar to, or different than the method 625.

At 626, an instance of single vector packed matrix multiplication and accumulation instruction is fetched. The single instruction may be any of those described elsewhere herein (e.g., one of the instructions 101, 201, 301, 401, etc.). In some examples, the instruction is fetched from an instruction cache. The instruction may explicitly specify, or otherwise indicate, a first (e.g., source) matrix (e.g., indicate a first vector register having 128-bit lane to store the first matrix) having two rows by K columns of data elements each having a first number of bits, wherein K is equal to 64-bits divided by the first number of bits, a second (e.g., source) matrix (e.g., indicate a second vector register having 128-bit lane to store the second matrix) having K rows by two columns of data elements each having the first number of bits, and a third (e.g., source) matrix (e.g., indicate a third vector register having 128-bit lane to store the third matrix) having two rows by two columns of data elements each having a second number of bits, the second number of bits being greater than the first number of bits. At least one, two, or all three of these matrices may be stored in a vector register and/or in a one-dimensional vector format. These matrices may optionally be the same as or similar to what is described elsewhere herein (e.g., as previously described for FIGs. 1-4).

The fetched instruction may be decoded at 627. For example, the fetched instruction may be decoded by decoder circuitry (e.g., decoder circuitry 102).

The source operands may be retrieved when the decoded instruction is scheduled at 628. For example, when one or more of the source operands are memory operands, the data from the indicated memory location may be retrieved.

At 629, the decoded instruction is executed by execution circuitry (e.g., one of execution circuitry 103,203,303,403, execution cluster(s) 1160 of **FIG. 11(B)****.** This may include performing operations corresponding to and/or according to the instruction. In some embodiments, the operations may include generating a result matrix having two rows by two columns (e.g., M=2, N=2) of result data elements each having the second number of bits. In some embodiments, the result matrix may represent an accumulation of the third matrix (e.g., an accumulation matrix) with a product matrix (e.g., having two rows by two columns) generated from a matrix multiplication using and/or involving and/or based on the first and second matrices. In some embodiments, the product matrix may be generated from a matrix multiplication using the first and second matrices in which the data elements of the first and second matrices are converted from the first number of bits to a greater number of bits (e.g., converted from 8-bits or 16-bits to 32-bits) prior to the matrix multiplication. In some embodiments, the product matrix may be generated from a matrix multiplication using the first and second matrices in which floating-point rounding may optionally be performed as needed during the matrix multiplication. In some embodiments, the operations may include storing the result matrix in the 128-bit lane of the third vector register that was initially used to store the third matrix. In some embodiments, the operations may include any of those described elsewhere herein, including for the detailed example instructions described herein (e.g., any of VMMTF32PS, VMM[BF16,F16]PS, VPMM[UU,SS,US,SU]BD, and VMM[B,H,BH,HB]F8PS).

In some examples, the instruction may be committed or retired at 630. This may cause the result operand to be stored in the destination register (e.g., a renamed register committed to an architectural register).

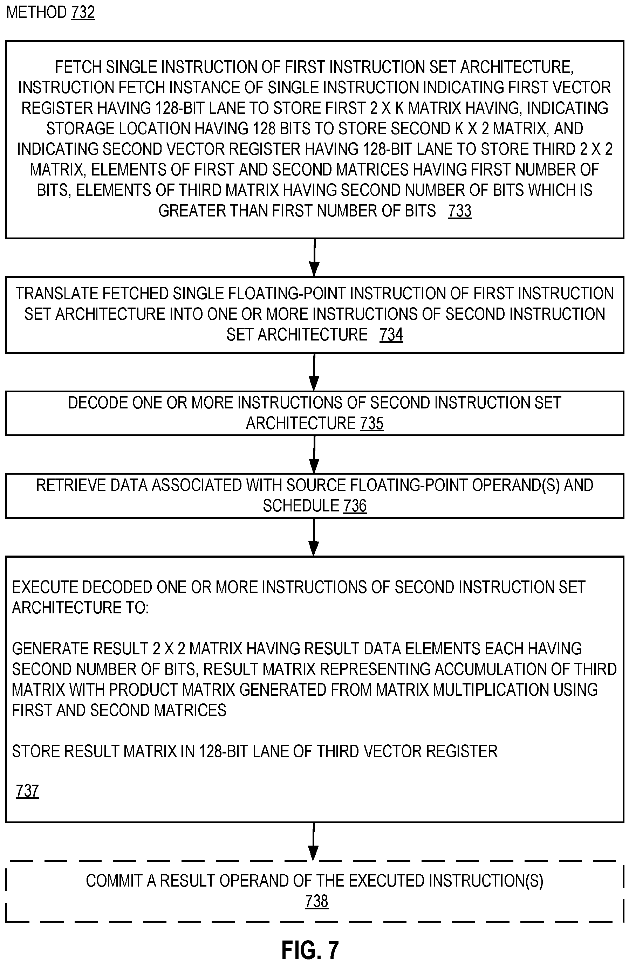

**FIG. 7** is a block flow diagram of an embodiment of a method 732 of performing an embodiment of a vector packed matrix multiplication and accumulation instruction using emulation or binary translation. In various embodiments, the method 732 may be performed by a processor, digital logic device, or integrated circuit. By way of example, the processors 100, 200, 300, 400, or 500, the processor core 1190 of **FIG. 11(B)****,** or a pipeline as described further below, may perform the method 732. The components, features, and specific optional details described herein for the processors 100, 200, 300, 400, or 500, the processor core 1190, or the pipeline 1100 may optionally apply to the method. Alternatively, the method 625 may be performed by a similar or different processor, core, or pipeline. Moreover, the processors 100, 200, 300, 400, or 500 may perform methods the same as, similar to, or different than the method 625.

At 733, an instance of single vector packed matrix multiplication and accumulation instruction of a first instruction set architecture is fetched. The single instruction may be any of those described elsewhere herein (e.g., any of the instructions 101, 201, 301, 401). In some examples, the instruction is fetched from an instruction cache. The instruction may explicitly specify, or otherwise indicate, a first (e.g., source) matrix (e.g., indicate a first vector register having 128-bit lane to store the first matrix) having two rows by K columns of data elements each having a first number of bits, wherein K is equal to 64-bits divided by the first number of bits, a second (e.g., source) matrix (e.g., indicate a second vector register having 128-bit lane to store the second matrix) having K rows by two columns of data elements each having the first number of bits, and a third (e.g., source) matrix (e.g., indicate a third vector register having 128-bit lane to store the third matrix) having two rows by two columns of data elements each having a second number of bits, the second number of bits being greater than the first number of bits. At least one, two, or all three of these matrices may be stored in a vector register and/or in a one-dimensional vector format. These matrices may optionally be the same as or similar to what is described elsewhere herein (e.g., as previously described for FIGs. 1-4).

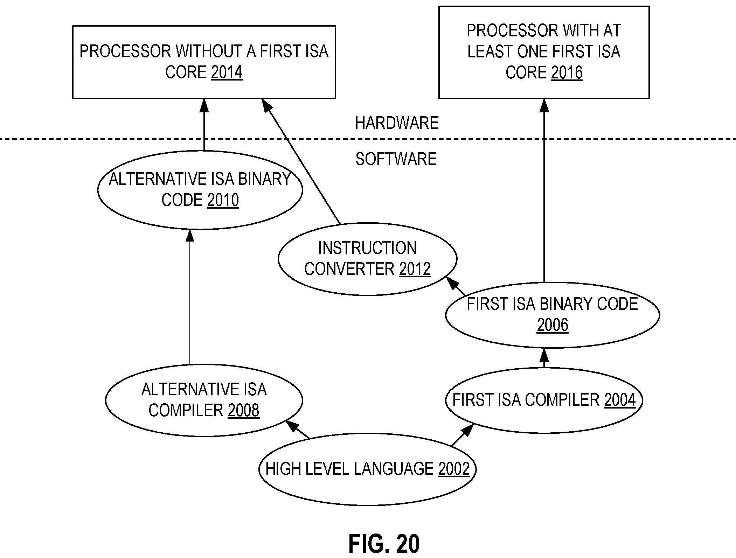

The fetched single vector packed matrix multiplication and accumulation instruction of the first instruction set architecture is translated into one or more instructions of a second, different instruction set architecture at 734. This translation may be performed by a translation and/or emulation layer of software in some examples. In some examples, this translation may be performed by an instruction converter 2012 as shown in **FIG. 20****.** In some examples, the translation may be performed by hardware translation circuitry.

The one or more translated instructions of the second instruction set architecture are decoded at 735. For example, the translated instructions may be decoded by decoder circuitry (e.g., one of decoder circuitries 102, 202, 302, 402). In some examples, the operations of translation 734 and decoding 735 may optionally be merged.

The source operands may be retrieved when the decoded instruction is scheduled at 736. For example, when one or more of the source operands are memory operands, the data from the indicated memory location may be retrieved.

At 737, the decoded instruction(s) of the second instruction set architecture is/are executed by execution circuitry (e.g., execution circuitry 103, 203, 303, 403, or execution cluster(s) 1160 of **FIG. 11(B)**) to perform the operation(s) indicated by and/or corresponding to the single instruction of the first instruction set architecture. In some embodiments, the operations may include generating a result matrix having two rows by two columns (e.g., M=2, N=2) of result data elements each having the second number of bits. In some embodiments, the result matrix may represent an accumulation of the third matrix (e.g., an accumulation matrix) with a product matrix (e.g., having two rows by two columns) generated from a matrix multiplication using and/or involving and/or based on the first and second matrices. In some embodiments, the product matrix may be generated from a matrix multiplication using the first and second matrices in which the data elements of the first and second matrices are converted from the first number of bits to a greater number of bits (e.g., converted from 8-bits or 16-bits to 32-bits) prior to the matrix multiplication. In some embodiments, the product matrix may be generated from a matrix multiplication using the first and second matrices in which floating-point rounding may optionally be performed as needed during the matrix multiplication. In some embodiments, the operations may include storing the result matrix in the 128-bit lane of the third vector register that was initially used to store the third matrix. In some embodiments, the operations may include any of those described elsewhere herein, including for the detailed example instructions described herein (e.g., any of VMMTF32PS, VMM[BF16,F16]PS, VPMM[UU,SS,US,SU]BD, and VMM[B,H,BH,HB]F8PS).

In some examples, the decoded instruction(s) of the second instruction set architecture are committed or retired at 738. This may cause the result floating-point operand to be stored in an architectural storage location used for and/or corresponding to the destination register (e.g., a renamed register committed to an architectural register).

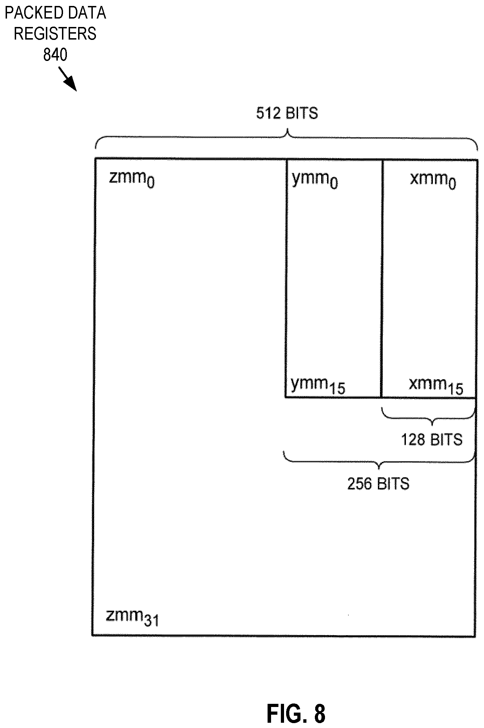

**FIG. 8** is a block diagram of an example embodiment of a suitable set of vector registers 840. The vector registers include thirty-two 512-bit vector registers labeled ZMM0 through ZMM31. In the illustrated embodiment, the lower order 256-bits of the lower sixteen registers, namely ZMM0-ZMM15, are aliased or overlaid on respective 256-bit vector registers labeled YMM0-YMM15, although this is not required. Likewise, in the illustrated embodiment, the lower order 128-bits of the registers YMM0-YMM15 are aliased or overlaid on respective 128-bit vector registers labeled XMM0-XMM15, although this also is not required. The 512-bit registers ZMM0 through ZMM31 are operative to hold 512-bit vectors, 256-bit vectors, or 128-bit vectors. The 256-bit registers YMM0-YMM15 are operative to hold 256-bit vectors or 128-bit vectors. The 128-bit registers XMM0-XMM15 are operative to hold 128-bit vectors. In some embodiments, each of the registers may be used to store either packed floating-point data or packed integer data. Different data element sizes and types are supported including any of the 8-bit, 16-bit, 32-bit integer and floating-point formats disclosed elsewhere herein. It is to be appreciated that this is just one illustrative example of a suitable set of registers. In alternate embodiments, different numbers of registers may be used and/or different sizes of registers may be used and/or aliasing of larger registers on smaller registers may or may not be used, and so on.

### Example Computer Architectures.

Detailed below are descriptions of example computer architectures. Other system designs and configurations known in the arts for laptop, desktop, and handheld personal computers (PC)s, personal digital assistants, engineering workstations, servers, disaggregated servers, network devices, network hubs, switches, routers, embedded processors, digital signal processors (DSPs), graphics devices, video game devices, set-top boxes, micro controllers, cell phones, portable media players, hand-held devices, and various other electronic devices, are also suitable. In general, a variety of systems or electronic devices capable of incorporating a processor and/or other execution logic as disclosed herein are generally suitable.

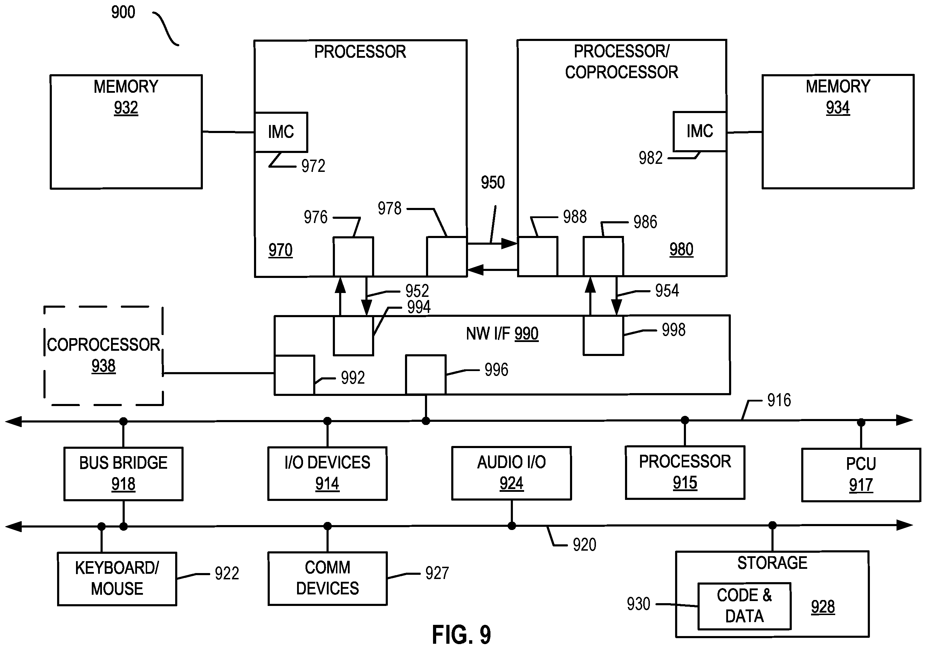

**FIG. 9** illustrates an example computing system. Multiprocessor system 900 is an interfaced system and includes a plurality of processors or cores including a first processor 970 and a second processor 980 coupled via an interface 950 such as a point-to-point (P-P) interconnect, a fabric, and/or bus. In some examples, the first processor 970 and the second processor 980 are homogeneous. In some examples, first processor 970 and the second processor 980 are heterogenous. Though the example system 900 is shown to have two processors, the system may have three or more processors, or may be a single processor system. In some examples, the computing system is a system on a chip (SoC).

Processors 970 and 980 are shown including integrated memory controller (IMC) circuitry 972 and 982, respectively. Processor 970 also includes interface circuits 976 and 978; similarly, second processor 980 includes interface circuits 986 and 988. Processors 970, 980 may exchange information via the interface 950 using interface circuits 978, 988. IMCs 972 and 982 couple the processors 970, 980 to respective memories, namely a memory 932 and a memory 934, which may be portions of main memory locally attached to the respective processors.

Processors 970, 980 may each exchange information with a network interface (NW I/F) 990 via individual interfaces 952, 954 using interface circuits 976, 994, 986, 998. The network interface 990 (e.g., one or more of an interconnect, bus, and/or fabric, and in some examples is a chipset) may optionally exchange information with a coprocessor 938 via an interface circuit 992. In some examples, the coprocessor 938 is a special-purpose processor, such as, for example, a high-throughput processor, a network or communication processor, compression engine, graphics processor, general purpose graphics processing unit (GPGPU), neural-network processing unit (NPU), embedded processor, or the like.

A shared cache (not shown) may be included in either processor 970, 980 or outside of both processors, yet connected with the processors via an interface such as P-P interconnect, such that either or both processors' local cache information may be stored in the shared cache if a processor is placed into a low power mode.

Network interface 990 may be coupled to a first interface 916 via interface circuit 996. In some examples, first interface 916 may be an interface such as a Peripheral Component Interconnect (PCI) interconnect, a PCI Express interconnect or another I/O interconnect. In some examples, first interface 916 is coupled to a power control unit (PCU) 917, which may include circuitry, software, and/or firmware to perform power management operations with regard to the processors 970, 980 and/or co-processor 938. PCU 917 provides control information to a voltage regulator (not shown) to cause the voltage regulator to generate the appropriate regulated voltage. PCU 917 also provides control information to control the operating voltage generated. In various examples, PCU 917 may include a variety of power management logic units (circuitry) to perform hardware-based power management. Such power management may be wholly processor controlled (e.g., by various processor hardware, and which may be triggered by workload and/or power, thermal or other processor constraints) and/or the power management may be performed responsive to external sources (such as a platform or power management source or system software).

PCU 917 is illustrated as being present as logic separate from the processor 970 and/or processor 980. In other cases, PCU 917 may execute on a given one or more of cores (not shown) of processor 970 or 980. In some cases, PCU 917 may be implemented as a microcontroller (dedicated or general-purpose) or other control logic configured to execute its own dedicated power management code, sometimes referred to as P-code. In yet other examples, power management operations to be performed by PCU 917 may be implemented externally to a processor, such as by way of a separate power management integrated circuit (PMIC) or another component external to the processor. In yet other examples, power management operations to be performed by PCU 917 may be implemented within BIOS or other system software.

Various I/O devices 914 may be coupled to first interface 916, along with a bus bridge 918 which couples first interface 916 to a second interface 920. In some examples, one or more additional processor(s) 915, such as coprocessors, high throughput many integrated core (MIC) processors, GPGPUs, accelerators (such as graphics accelerators or digital signal processing (DSP) units), field programmable gate arrays (FPGAs), or any other processor, are coupled to first interface 916. In some examples, second interface 920 may be a low pin count (LPC) interface. Various devices may be coupled to second interface 920 including, for example, a keyboard and/or mouse 922, communication devices 927 and storage circuitry 928. Storage circuitry 928 may be one or more non-transitory machine-readable storage media as described below, such as a disk drive or other mass storage device which may include instructions/code and data 930 and may implement the storage "ISAB03 in some examples. Further, an audio I/O 924 may be coupled to second interface 920. Note that other architectures than the point-to-point architecture described above are possible. For example, instead of the point-to-point architecture, a system such as multiprocessor system 900 may implement a multi-drop interface or other such architecture.

Example Core Architectures, Processors, and Computer Architectures.

Processor cores may be implemented in different ways, for different purposes, and in different processors. For instance, implementations of such cores may include: 1) a general purpose in-order core intended for general-purpose computing; 2) a high-performance general purpose out-of-order core intended for general-purpose computing; 3) a special purpose core intended primarily for graphics and/or scientific (throughput) computing. Implementations of different processors may include: 1) a CPU including one or more general purpose in-order cores intended for general-purpose computing and/or one or more general purpose out-of-order cores intended for general-purpose computing; and 2) a coprocessor including one or more special purpose cores intended primarily for graphics and/or scientific (throughput) computing. Such different processors lead to different computer system architectures, which may include: 1) the coprocessor on a separate chip from the CPU; 2) the coprocessor on a separate die in the same package as a CPU; 3) the coprocessor on the same die as a CPU (in which case, such a coprocessor is sometimes referred to as special purpose logic, such as integrated graphics and/or scientific (throughput) logic, or as special purpose cores); and 4) a system on a chip (SoC) that may be included on the same die as the described CPU (sometimes referred to as the application core(s) or application processor(s)), the above described coprocessor, and additional functionality. Example core architectures are described next, followed by descriptions of example processors and computer architectures.

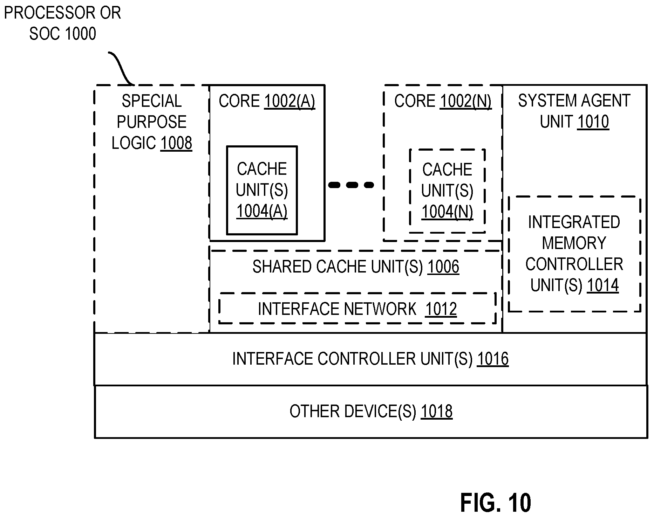

**FIG. 10** illustrates a block diagram of an example processor and/or SoC 1000 that may have one or more cores and an integrated memory controller. The solid lined boxes illustrate a processor 1000 with a single core 1002(A), system agent unit circuitry 1010, and a set of one or more interface controller unit(s) circuitry 1016, while the optional addition of the dashed lined boxes illustrates an alternative processor 1000 with multiple cores 1002(A)-(N), a set of one or more integrated memory controller unit(s) circuitry 1014 in the system agent unit circuitry 1010, and special purpose logic 1008, as well as a set of one or more interface controller units circuitry 1016. Note that the processor 1000 may be one of the processors 970 or 980, or co-processor 938 or 915 of **FIG. 9****.**

Thus, different implementations of the processor 1000 may include: 1) a CPU with the special purpose logic 1008 being integrated graphics and/or scientific (throughput) logic (which may include one or more cores, not shown), and the cores 1002(A)-(N) being one or more general purpose cores (e.g., general purpose in-order cores, general purpose out-of-order cores, or a combination of the two); 2) a coprocessor with the cores 1002(A)-(N) being a large number of special purpose cores intended primarily for graphics and/or scientific (throughput); and 3) a coprocessor with the cores 1002(A)-(N) being a large number of general purpose in-order cores. Thus, the processor 1000 may be a general-purpose processor, coprocessor or special-purpose processor, such as, for example, a network or communication processor, compression engine, graphics processor, GPGPU (general purpose graphics processing unit), a high throughput many integrated core (MIC) coprocessor (including 30 or more cores), embedded processor, or the like. The processor may be implemented on one or more chips. The processor 1000 may be a part of and/or may be implemented on one or more substrates using any of a number of process technologies, such as, for example, complementary metal oxide semiconductor (CMOS), bipolar CMOS (BiCMOS), P-type metal oxide semiconductor (PMOS), or N-type metal oxide semiconductor (NMOS).

A memory hierarchy includes one or more levels of cache unit(s) circuitry 1004(A)-(N) within the cores 1002(A)-(N), a set of one or more shared cache unit(s) circuitry 1006, and external memory (not shown) coupled to the set of integrated memory controller unit(s) circuitry 1014. The set of one or more shared cache unit(s) circuitry 1006 may include one or more mid-level caches, such as level 2 (L2), level 3 (L3), level 4 (L4), or other levels of cache, such as a last level cache (LLC), and/or combinations thereof. While in some examples interface network circuitry 1012 (e.g., a ring interconnect) interfaces the special purpose logic 1008 (e.g., integrated graphics logic), the set of shared cache unit(s) circuitry 1006, and the system agent unit circuitry 1010, alternative examples use any number of well-known techniques for interfacing such units. In some examples, coherency is maintained between one or more of the shared cache unit(s) circuitry 1006 and cores 1002(A)-(N). In some examples, interface controller units circuitry 1016 couple the cores 1002 to one or more other devices 1018 such as one or more I/O devices, storage, one or more communication devices (e.g., wireless networking, wired networking, etc.), etc.

In some examples, one or more of the cores 1002(A)-(N) are capable of multi-threading. The system agent unit circuitry 1010 includes those components coordinating and operating cores 1002(A)-(N). The system agent unit circuitry 1010 may include, for example, power control unit (PCU) circuitry and/or display unit circuitry (not shown). The PCU may be or may include logic and components needed for regulating the power state of the cores 1002(A)-(N) and/or the special purpose logic 1008 (e.g., integrated graphics logic). The display unit circuitry is for driving one or more externally connected displays.

The cores 1002(A)-(N) may be homogenous in terms of instruction set architecture (ISA). Alternatively, the cores 1002(A)-(N) may be heterogeneous in terms of ISA; that is, a subset of the cores 1002(A)-(N) may be capable of executing an ISA, while other cores may be capable of executing only a subset of that ISA or another ISA.

Example Core Architectures - In-order and out-of-order core block diagram.

**FIG. 11(A)** is a block diagram illustrating both an example in-order pipeline and an example register renaming, out-of-order issue/execution pipeline according to examples. **FIG. 11(B)** is a block diagram illustrating both an example in-order architecture core and an example register renaming, out-of-order issue/execution architecture core to be included in a processor according to examples. The solid lined boxes in **FIGS. 11(A)****-(B)** illustrate the in-order pipeline and in-order core, while the optional addition of the dashed lined boxes illustrates the register renaming, out-of-order issue/execution pipeline and core. Given that the in-order aspect is a subset of the out-of-order aspect, the out-of-order aspect will be described.

In **FIG. 11(A)****,** a processor pipeline 1100 includes a fetch stage 1102, an optional length decoding stage 1104, a decode stage 1106, an optional allocation (Alloc) stage 1108, an optional renaming stage 1110, a schedule (also known as a dispatch or issue) stage 1112, an optional register read/memory read stage 1114, an execute stage 1116, a write back/memory write stage 1118, an optional exception handling stage 1122, and an optional commit stage 1124. One or more operations can be performed in each of these processor pipeline stages. For example, during the fetch stage 1102, one or more instructions are fetched from instruction memory, and during the decode stage 1106, the one or more fetched instructions may be decoded, addresses (e.g., load store unit (LSU) addresses) using forwarded register ports may be generated, and branch forwarding (e.g., immediate offset or a link register (LR)) may be performed. In one example, the decode stage 1106 and the register read/memory read stage 1114 may be combined into one pipeline stage. In one example, during the execute stage 1116, the decoded instructions may be executed, LSU address/data pipelining to an Advanced Microcontroller Bus (AMB) interface may be performed, multiply and add operations may be performed, arithmetic operations with branch results may be performed, etc.

By way of example, the example register renaming, out-of-order issue/execution architecture core of **FIG. 11(B)** may implement the pipeline 1100 as follows: 1) the instruction fetch circuitry 1138 performs the fetch and length decoding stages 1102 and 1104; 2) the decode circuitry 1140 performs the decode stage 1106; 3) the rename/allocator unit circuitry 1152 performs the allocation stage 1108 and renaming stage 1110; 4) the scheduler(s) circuitry 1156 performs the schedule stage 1112; 5) the physical register file(s) circuitry 1158 and the memory unit circuitry 1170 perform the register read/memory read stage 1114; the execution cluster(s) 1160 perform the execute stage 1116; 6) the memory unit circuitry 1170 and the physical register file(s) circuitry 1158 perform the write back/memory write stage 1118; 7) various circuitry may be involved in the exception handling stage 1122; and 8) the retirement unit circuitry 1154 and the physical register file(s) circuitry 1158 perform the commit stage 1124.

**FIG. 11(B)** shows a processor core 1190 including front-end unit circuitry 1130 coupled to execution engine unit circuitry 1150, and both are coupled to memory unit circuitry 1170. The core 1190 may be a reduced instruction set architecture computing (RISC) core, a complex instruction set architecture computing (CISC) core, a very long instruction word (VLIW) core, or a hybrid or alternative core type. As yet another option, the core 1190 may be a special-purpose core, such as, for example, a network or communication core, compression engine, coprocessor core, general purpose computing graphics processing unit (GPGPU) core, graphics core, or the like.

The front-end unit circuitry 1130 may include branch prediction circuitry 1132 coupled to instruction cache circuitry 1134, which is coupled to an instruction translation lookaside buffer (TLB) 1136, which is coupled to instruction fetch circuitry 1138, which is coupled to decode circuitry 1140. In one example, the instruction cache circuitry 1134 is included in the memory unit circuitry 1170 rather than the front-end circuitry 1130. The decode circuitry 1140 (or decoder) may decode instructions, and generate as an output one or more micro-operations, micro-code entry points, microinstructions, other instructions, or other control signals, which are decoded from, or which otherwise reflect, or are derived from, the original instructions. The decode circuitry 1140 may further include address generation unit (AGU, not shown) circuitry. In one example, the AGU generates an LSU address using forwarded register ports, and may further perform branch forwarding (e.g., immediate offset branch forwarding, LR register branch forwarding, etc.). The decode circuitry 1140 may be implemented using various different mechanisms. Examples of suitable mechanisms include, but are not limited to, look-up tables, hardware implementations, programmable logic arrays (PLAs), microcode read only memories (ROMs), etc. In one example, the core 1190 includes a microcode ROM (not shown) or other medium that stores microcode for certain macroinstructions (e.g., in decode circuitry 1140 or otherwise within the front-end circuitry 1130). In one example, the decode circuitry 1140 includes a micro-operation (micro-op) or operation cache (not shown) to hold/cache decoded operations, micro-tags, or micro-operations generated during the decode or other stages of the processor pipeline 1100. The decode circuitry 1140 may be coupled to rename/allocator unit circuitry 1152 in the execution engine circuitry 1150.

The execution engine circuitry 1150 includes the rename/allocator unit circuitry 1152 coupled to retirement unit circuitry 1154 and a set of one or more scheduler(s) circuitry 1156. The scheduler(s) circuitry 1156 represents any number of different schedulers, including reservations stations, central instruction window, etc. In some examples, the scheduler(s) circuitry 1156 can include arithmetic logic unit (ALU) scheduler/scheduling circuitry, ALU queues, address generation unit (AGU) scheduler/scheduling circuitry, AGU queues, etc. The scheduler(s) circuitry 1156 is coupled to the physical register file(s) circuitry 1158. Each of the physical register file(s) circuitry 1158 represents one or more physical register files, different ones of which store one or more different data types, such as scalar integer, scalar floating-point, packed integer, packed floating-point, vector integer, vector floating-point, status (e.g., an instruction pointer that is the address of the next instruction to be executed), etc. In one example, the physical register file(s) circuitry 1158 includes vector registers unit circuitry, writemask registers unit circuitry, and scalar register unit circuitry. These register units may provide architectural vector registers, vector mask registers, general-purpose registers, etc. The physical register file(s) circuitry 1158 is coupled to the retirement unit circuitry 1154 (also known as a retire queue or a retirement queue) to illustrate various ways in which register renaming and out-of-order execution may be implemented (e.g., using a reorder buffer(s) (ROB(s)) and a retirement register file(s); using a future file(s), a history buffer(s), and a retirement register file(s); using a register maps and a pool of registers; etc.). The retirement unit circuitry 1154 and the physical register file(s) circuitry 1158 are coupled to the execution cluster(s) 1160. The execution cluster(s) 1160 includes a set of one or more execution unit(s) circuitry 1162 and a set of one or more memory access circuitry 1164. The execution unit(s) circuitry 1162 may perform various arithmetic, logic, floating-point or other types of operations (e.g., shifts, addition, subtraction, multiplication) and on various types of data (e.g., scalar integer, scalar floating-point, packed integer, packed floating-point, vector integer, vector floating-point). While some examples may include a number of execution units or execution unit circuitry dedicated to specific functions or sets of functions, other examples may include only one execution unit circuitry or multiple execution units/execution unit circuitry that all perform all functions. The scheduler(s) circuitry 1156, physical register file(s) circuitry 1158, and execution cluster(s) 1160 are shown as being possibly plural because certain examples create separate pipelines for certain types of data/operations (e.g., a scalar integer pipeline, a scalar floating-point/packed integer/packed floating-point/vector integer/vector floating-point pipeline, and/or a memory access pipeline that each have their own scheduler circuitry, physical register file(s) circuitry, and/or execution cluster - and in the case of a separate memory access pipeline, certain examples are implemented in which only the execution cluster of this pipeline has the memory access unit(s) circuitry 1164). It should also be understood that where separate pipelines are used, one or more of these pipelines may be out-of-order issue/execution and the rest in-order.

In some examples, the execution engine unit circuitry 1150 may perform load store unit (LSU) address/data pipelining to an Advanced Microcontroller Bus (AMB) interface (not shown), and address phase and writeback, data phase load, store, and branches.

The set of memory access circuitry 1164 is coupled to the memory unit circuitry 1170, which includes data TLB circuitry 1172 coupled to data cache circuitry 1174 coupled to level 2 (L2) cache circuitry 1176. In one example, the memory access circuitry 1164 may include load unit circuitry, store address unit circuitry, and store data unit circuitry, each of which is coupled to the data TLB circuitry 1172 in the memory unit circuitry 1170. The instruction cache circuitry 1134 is further coupled to the level 2 (L2) cache circuitry 1176 in the memory unit circuitry 1170. In one example, the instruction cache 1134 and the data cache 1174 are combined into a single instruction and data cache (not shown) in L2 cache circuitry 1176, level 3 (L3) cache circuitry (not shown), and/or main memory. The L2 cache circuitry 1176 is coupled to one or more other levels of cache and eventually to a main memory.

The core 1190 may support one or more instructions sets (e.g., the x86 instruction set architecture (optionally with some extensions that have been added with newer versions); the MIPS instruction set architecture; the ARM instruction set architecture (optionally with optional additional extensions such as NEON)), including the instruction(s) described herein. In one example, the core 1190 includes logic to support a packed data instruction set architecture extension (e.g., AVX1, AVX2), thereby allowing the operations used by many multimedia applications to be performed using packed data.

### Example Execution Unit(s) Circuitry.

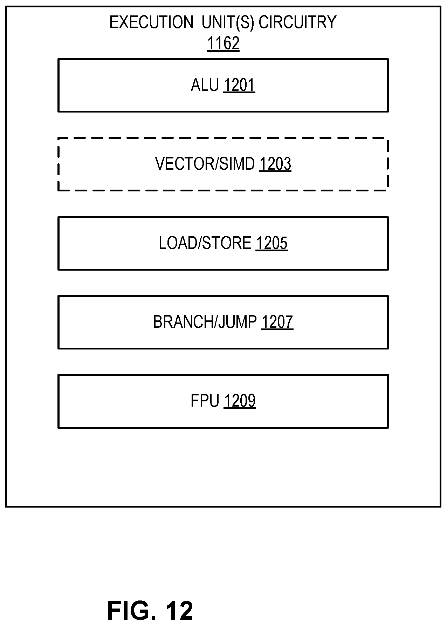

**FIG. 12** illustrates examples of execution unit(s) circuitry, such as execution unit(s) circuitry 1162 of **FIG. 11(B)****.** As illustrated, execution unit(s) circuity 1162 may include one or more ALU circuits 1201, optional vector/single instruction multiple data (SIMD) circuits 1203, load/store circuits 1205, branch/jump circuits 1207, and/or Floating-point unit (FPU) circuits 1209. ALU circuits 1201 perform integer arithmetic and/or Boolean operations. Vector/SIMD circuits 1203 perform vector/SIMD operations on packed data (such as SIMD/vector registers). Load/store circuits 1205 execute load and store instructions to load data from memory into registers or store from registers to memory. Load/store circuits 1205 may also generate addresses. Branch/jump circuits 1207 cause a branch or jump to a memory address depending on the instruction. FPU circuits 1209 perform floating-point arithmetic. The width of the execution unit(s) circuitry 1162 varies depending upon the example and can range from 16-bit to 1,024-bit, for example. In some examples, two or more smaller execution units are logically combined to form a larger execution unit (e.g., two 128-bit execution units are logically combined to form a 256-bit execution unit).

### Example Register Architecture.

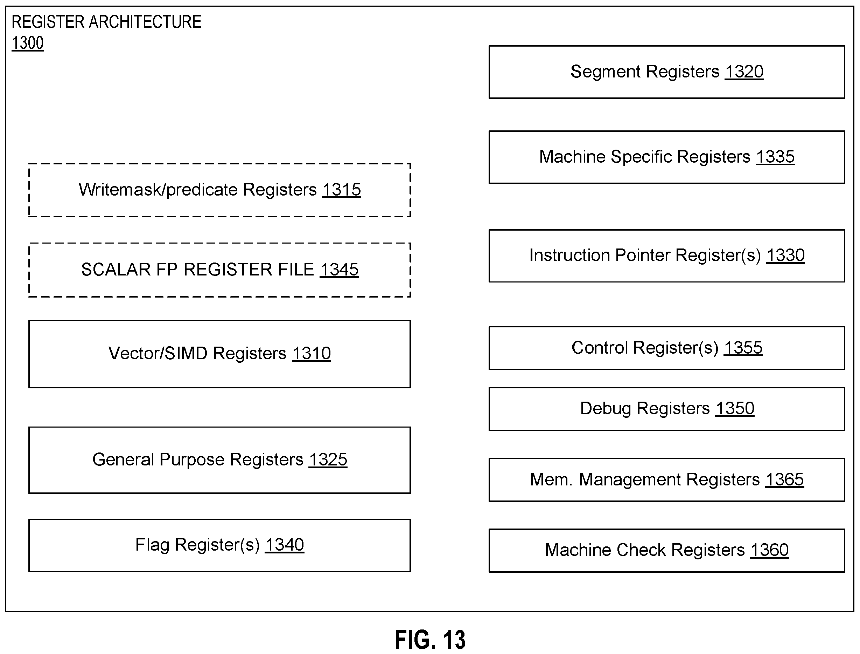

**FIG. 13** is a block diagram of a register architecture 1300 according to some examples. As illustrated, the register architecture 1300 includes vector/SIMD registers 1310 that vary from 128-bit to 1,024 bits width. In some examples, the vector/SIMD registers 1310 are physically 512-bits and, depending upon the mapping, only some of the lower bits are used. For example, in some examples, the vector/SIMD registers 1310 are ZMM registers which are 512 bits: the lower 256 bits are used for YMM registers and the lower 128 bits are used for XMM registers. As such, there is an overlay of registers. In some examples, a vector length field selects between a maximum length and one or more other shorter lengths, where each such shorter length is half the length of the preceding length. Scalar operations are operations performed on the lowest order data element position in a ZMM/YMM/XMM register; the higher order data element positions are either left the same as they were prior to the instruction or zeroed depending on the example.

In some examples, the register architecture 1300 includes writemask/predicate registers 1315. For example, in some examples, there are 8 writemask/predicate registers (sometimes called k0 through k7) that are each 16-bit, 32-bit, 64-bit, or 128-bit in size. Writemask/predicate registers 1315 may allow for merging (e.g., allowing any set of elements in the destination to be protected from updates during the execution of any operation) and/or zeroing (e.g., zeroing vector masks allow any set of elements in the destination to be zeroed during the execution of any operation). In some examples, each data element position in a given writemask/predicate register 1315 corresponds to a data element position of the destination. In other examples, the writemask/predicate registers 1315 are scalable and consists of a set number of enable bits for a given vector element (e.g., eight enable bits per 64-bit vector element).

The register architecture 1300 includes a plurality of general-purpose registers 1325. These registers may be 16-bit, 32-bit, 64-bit, etc. and can be used for scalar operations. In some examples, these registers are referenced by the names RAX, RBX, RCX, RDX, RBP, RSI, RDI, RSP, and R8 through R15.

In some examples, the register architecture 1300 includes scalar floating-point (FP) register file 1345 which is used for scalar floating-point operations on 32/64/80-bit floating-point data using the x87 instruction set architecture extension or as MMX registers to perform operations on 64-bit packed integer data, as well as to hold operands for some operations performed between the MMX and XMM registers.

One or more flag registers 1340 (e.g., EFLAGS, RFLAGS, etc.) store status and control information for arithmetic, compare, and system operations. For example, the one or more flag registers 1340 may store condition code information such as carry, parity, auxiliary carry, zero, sign, and overflow. In some examples, the one or more flag registers 1340 are called program status and control registers.

Segment registers 1320 contain segment points for use in accessing memory. In some examples, these registers are referenced by the names CS, DS, SS, ES, FS, and GS.

Machine specific registers (MSRs) 1335 control and report on processor performance. Most MSRs 1335 handle system-related functions and are not accessible to an application program. Machine check registers 1360 consist of control, status, and error reporting MSRs that are used to detect and report on hardware errors.

One or more instruction pointer register(s) 1330 store an instruction pointer value. Control register(s) 1355 (e.g., CR0-CR4) determine the operating mode of a processor (e.g., processor 970, 980, 938, 915, and/or 1000) and the characteristics of a currently executing task. Debug registers 1350 control and allow for the monitoring of a processor or core's debugging operations.

Memory (mem) management registers 1365 specify the locations of data structures used in protected mode memory management. These registers may include a global descriptor table register (GDTR), interrupt descriptor table register (IDTR), task register, and a local descriptor table register (LDTR) register.

Alternative examples may use wider or narrower registers. Additionally, alternative examples may use more, less, or different register files and registers. The register architecture 1300 may, for example, be used in register file / memory 'ISAB08, or physical register file(s) circuitry 1158.

### Instruction set architectures.

An instruction set architecture (ISA) may include one or more instruction formats. A given instruction format may define various fields (e.g., number of bits, location of bits) to specify, among other things, the operation to be performed (e.g., opcode) and the operand(s) on which that operation is to be performed and/or other data field(s) (e.g., mask). Some instruction formats are further broken down through the definition of instruction templates (or sub-formats). For example, the instruction templates of a given instruction format may be defined to have different subsets of the instruction format's fields (the included fields are typically in the same order, but at least some have different bit positions because there are less fields included) and/or defined to have a given field interpreted differently. Thus, each instruction of an ISA is expressed using a given instruction format (and, if defined, in a given one of the instruction templates of that instruction format) and includes fields for specifying the operation and the operands. For example, an example ADD instruction has a specific opcode and an instruction format that includes an opcode field to specify that opcode and operand fields to select operands (source1/destination and source2); and an occurrence of this ADD instruction in an instruction stream will have specific contents in the operand fields that select specific operands. In addition, though the description below is made in the context of x86 ISA, it is within the knowledge of one skilled in the art to apply the teachings of the present disclosure in another ISA.

### Example Instruction Formats.

Examples of the instruction(s) described herein may be embodied in different formats. Additionally, example systems, architectures, and pipelines are detailed below. Examples of the instruction(s) may be executed on such systems, architectures, and pipelines, but are not limited to those detailed.

**FIG. 14** illustrates examples of an instruction format. As illustrated, an instruction may include multiple components including, but not limited to, one or more fields for: one or more prefixes 1401, an opcode 1403, addressing information 1405 (e.g., register identifiers, memory addressing information, etc.), a displacement value 1407, and/or an immediate value 1409. Note that some instructions utilize some or all the fields of the format whereas others may only use the field for the opcode 1403. In some examples, the order illustrated is the order in which these fields are to be encoded, however, it should be appreciated that in other examples these fields may be encoded in a different order, combined, etc.

The prefix(es) field(s) 1401, when used, modifies an instruction. In some examples, one or more prefixes are used to repeat string instructions (e.g., 0xF0, 0xF2, 0xF3, etc.), to provide section overrides (e.g., 0x2E, 0x36, 0x3E, 0x26, 0x64, 0x65, 0x2E, 0x3E, etc.), to perform bus lock operations, and/or to change operand (e.g., 0x66) and address sizes (e.g., 0x67). Certain instructions require a mandatory prefix (e.g., 0x66, 0xF2, 0xF3, etc.). Certain of these prefixes may be considered "legacy" prefixes. Other prefixes, one or more examples of which are detailed herein, indicate, and/or provide further capability, such as specifying particular registers, etc. The other prefixes typically follow the "legacy" prefixes.

The opcode field 1403 is used to at least partially define the operation to be performed upon a decoding of the instruction. In some examples, a primary opcode encoded in the opcode field 1403 is one, two, or three bytes in length. In other examples, a primary opcode can be a different length. An additional 3-bit opcode field is sometimes encoded in another field.

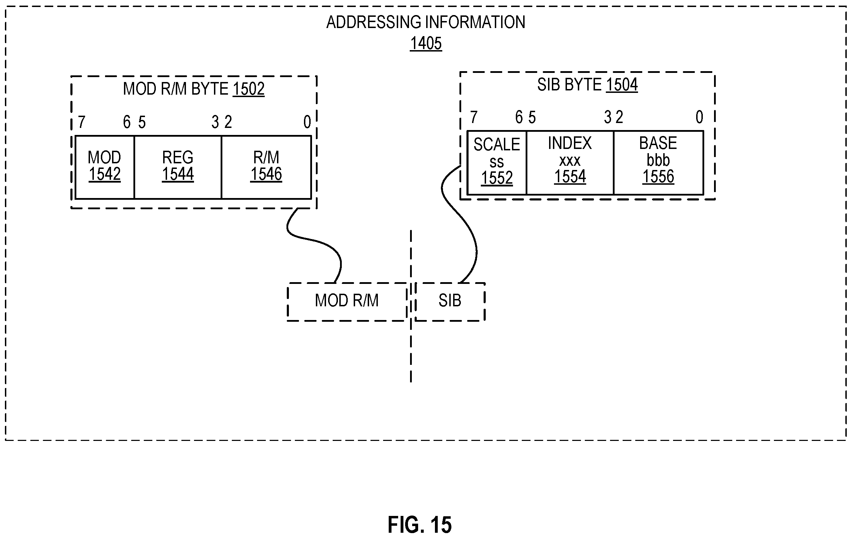

The addressing information field 1405 is used to address one or more operands of the instruction, such as a location in memory or one or more registers. **FIG. 15** illustrates examples of the addressing information field 1405. In this illustration, an optional MOD R/M byte 1502 and an optional Scale, Index, Base (SIB) byte 1504 are shown. The MOD R/M byte 1502 and the SIB byte 1504 are used to encode up to two operands of an instruction, each of which is a direct register or effective memory address. Note that both fields are optional in that not all instructions include one or more of these fields. The MOD R/M byte 1502 includes a MOD field 1542, a register (reg) field 1544, and R/M field 1546.

The content of the MOD field 1542 distinguishes between memory access and non-memory access modes. In some examples, when the MOD field 1542 has a binary value of 11 (1 1b), a register-direct addressing mode is utilized, and otherwise a register-indirect addressing mode is used.

The register field 1544 may encode either the destination register operand or a source register operand or may encode an opcode extension and not be used to encode any instruction operand. The content of register field 1544, directly or through address generation, specifies the locations of a source or destination operand (either in a register or in memory). In some examples, the register field 1544 is supplemented with an additional bit from a prefix (e.g., prefix 1401) to allow for greater addressing.

The R/M field 1546 may be used to encode an instruction operand that references a memory address or may be used to encode either the destination register operand or a source register operand. Note the R/M field 1546 may be combined with the MOD field 1542 to dictate an addressing mode in some examples.

The SIB byte 1504 includes a scale field 1552, an index field 1554, and a base field 1556 to be used in the generation of an address. The scale field 1552 indicates a scaling factor. The index field 1554 specifies an index register to use. In some examples, the index field 1554 is supplemented with an additional bit from a prefix (e.g., prefix 1401) to allow for greater addressing. The base field 1556 specifies a base register to use. In some examples, the base field 1556 is supplemented with an additional bit from a prefix (e.g., prefix 1401) to allow for greater addressing. In practice, the content of the scale field 1552 allows for the scaling of the content of the index field 1554 for memory address generation (e.g., for address generation that uses 2^{scale} * index + base).

Some addressing forms utilize a displacement value to generate a memory address. For example, a memory address may be generated according to 2^{scale} * index + base + displacement, index*scale + displacement, r/m + displacement, instruction pointer (RIP/EIP) + displacement, register + displacement, etc. The displacement may be a 1-byte, 2-byte, 4-byte, etc. value. In some examples, the displacement field 1407 provides this value. Additionally, in some examples, a displacement factor usage is encoded in the MOD field of the addressing information field 1405 that indicates a compressed displacement scheme for which a displacement value is calculated and stored in the displacement field 1407.

In some examples, the immediate value field 1409 specifies an immediate value for the instruction. An immediate value may be encoded as a 1-byte value, a 2-byte value, a 4-byte value, etc.

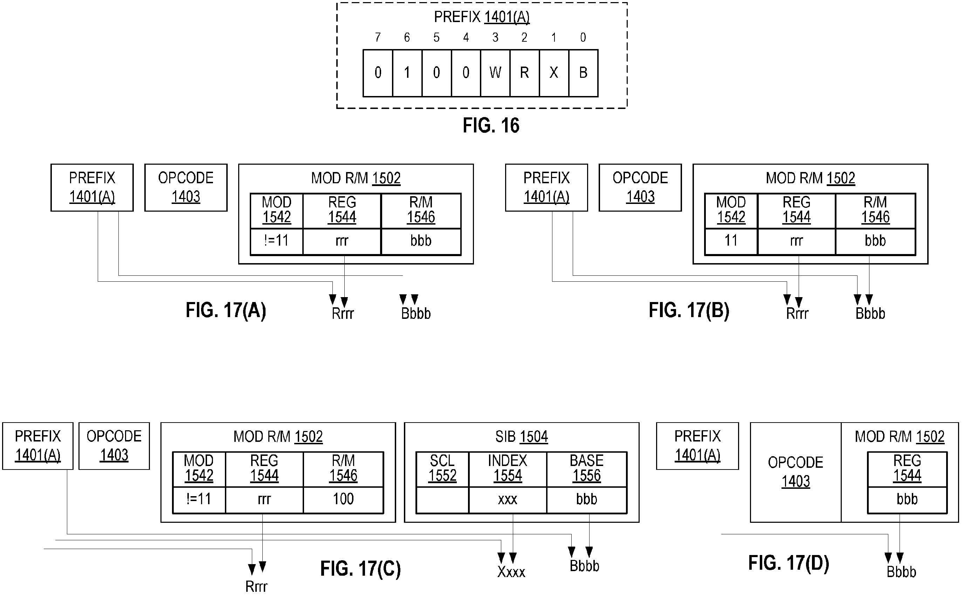

**FIG. 16** illustrates examples of a first prefix 1401(A). In some examples, the first prefix 1401(A) is an example of a REX prefix. Instructions that use this prefix may specify general purpose registers, 64-bit packed data registers (e.g., single instruction, multiple data (SIMD) registers or vector registers), and/or control registers and debug registers (e.g., CR8-CR15 and DR8-DR15).

Instructions using the first prefix 1401(A) may specify up to three registers using 3-bit fields depending on the format: 1) using the reg field 1544 and the R/M field 1546 of the MOD R/M byte 1502; 2) using the MOD R/M byte 1502 with the SIB byte 1504 including using the reg field 1544 and the base field 1556 and index field 1554; or 3) using the register field of an opcode.

In the first prefix 1401(A), bit positions 7:4 are set as 0100. Bit position 3 (W) can be used to determine the operand size but may not solely determine operand width. As such, when W = 0, the operand size is determined by a code segment descriptor (CS.D) and when W = 1, the operand size is 64-bit.

Note that the addition of another bit allows for 16 (2⁴) registers to be addressed, whereas the MOD R/M reg field 1544 and MOD R/M R/M field 1546 alone can each only address eight registers.

In the first prefix 1401(A), bit position 2 (R) may be an extension of the MOD R/M reg field 1544 and may be used to modify the MOD R/M reg field 1544 when that field encodes a general-purpose register, a 64-bit packed data register (e.g., a SSE register), or a control or debug register. R is ignored when MOD R/M byte 1502 specifies other registers or defines an extended opcode.

Bit position 1 (X) may modify the SIB byte index field 1554.

Bit position 0 (B) may modify the base in the MOD R/M R/M field 1546 or the SIB byte base field 1556; or it may modify the opcode register field used for accessing general purpose registers (e.g., general purpose registers 1325).

**FIGS. 17(A)****-(D)** illustrate examples of how the R, X, and B fields of the first prefix 1401(A) are used. **FIG. 17(A)** illustrates R and B from the first prefix 1401(A) being used to extend the reg field 1544 and R/M field 1546 of the MOD R/M byte 1502 when the SIB byte 15 04 is not used for memory addressing. **FIG. 17(B)** illustrates R and B from the first prefix 1401(A) being used to extend the reg field 1544 and R/M field 1546 of the MOD R/M byte 1502 when the SIB byte 15 04 is not used (register-register addressing). **FIG. 17(C)** illustrates R, X, and B from the first prefix 1401(A) being used to extend the reg field 1544 of the MOD R/M byte 1502 and the index field 1554 and base field 1556 when the SIB byte 15 04 being used for memory addressing. **FIG. 17(D)** illustrates B from the first prefix 1401(A) being used to extend the reg field 1544 of the MOD R/M byte 1502 when a register is encoded in the opcode 1403.

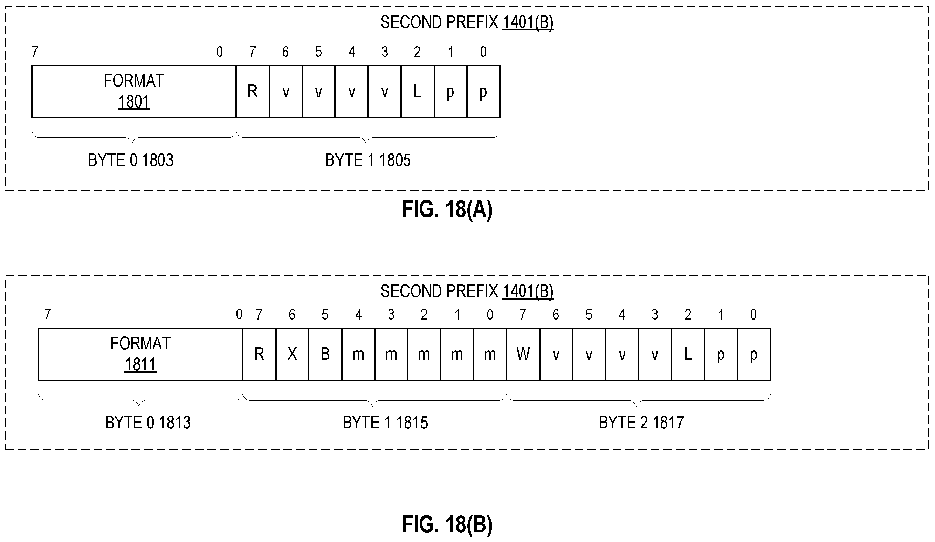

**FIGS. 18(A)****-(B)** illustrate examples of a second prefix 1401(B). In some examples, the second prefix 1401(B) is an example of a VEX prefix. The second prefix 1401(B) encoding allows instructions to have more than two operands, and allows SIMD vector registers (e.g., vector/SIMD registers 1310) to be longer than 64-bits (e.g., 128-bit and 256-bit). The use of the second prefix 1401(B) provides for three-operand (or more) syntax. For example, previous two-operand instructions performed operations such as A = A + B, which overwrites a source operand. The use of the second prefix 1401(B) enables operands to perform nondestructive operations such as A = B + C.

In some examples, the second prefix 1401(B) comes in two forms - a two-byte form and a three-byte form. The two-byte second prefix 1401(B) is used mainly for 128-bit, scalar, and some 256-bit instructions; while the three-byte second prefix 1401(B) provides a compact replacement of the first prefix 1401(A) and 3-byte opcode instructions.

**FIG. 18(A)** illustrates examples of a two-byte form of the second prefix 1401(B). In one example, a format field 1801 (byte 0 1803) contains the value C5H. In one example, byte 1 1805 includes an "R" value in bit[7]. This value is the complement of the "R" value of the first prefix 1401(A). Bit[2] is used to dictate the length (L) of the vector (where a value of 0 is a scalar or 128-bit vector and a value of 1 is a 256-bit vector). Bits[1:0] provide opcode extensionality equivalent to some legacy prefixes (e.g., 00 = no prefix, 01 = 66H, 10 = F3H, and 11 = F2H). Bits[6:3] shown as vvvv may be used to: 1) encode the first source register operand, specified in inverted (1s complement) form and valid for instructions with 2 or more source operands; 2) encode the destination register operand, specified in 1s complement form for certain vector shifts; or 3) not encode any operand, the field is reserved and should contain a certain value, such as 1111b.

Instructions that use this prefix may use the MOD R/M R/M field 1546 to encode the instruction operand that references a memory address or encode either the destination register operand or a source register operand.

Instructions that use this prefix may use the MOD R/M reg field 1544 to encode either the destination register operand or a source register operand, or to be treated as an opcode extension and not used to encode any instruction operand.

For instruction syntax that supports four operands, vvvv, the MOD R/M R/M field 1546 and the MOD R/M reg field 1544 encode three of the four operands. Bits[7:4] of the immediate value field 1409 are then used to encode the third source register operand.

**FIG. 18(B)** illustrates examples of a three-byte form of the second prefix 1401(B). In one example, a format field 1811 (byte 0 1813) contains the value C4H. Byte 1 1815 includes in bits[7:5] "R," "X," and "B" which are the complements of the same values of the first prefix 1401(A). Bits[4:0] of byte 1 1815 (shown as mmmmm) include content to encode, as needed, one or more implied leading opcode bytes. For example, 00001 implies a 0FH leading opcode, 00010 implies a 0F38H leading opcode, 00011 implies a 0F3AH leading opcode, etc.

Bit[7] of byte 2 1817 is used similar to W of the first prefix 1401(A) including helping to determine promotable operand sizes. Bit[2] is used to dictate the length (L) of the vector (where a value of 0 is a scalar or 128-bit vector and a value of 1 is a 256-bit vector). Bits[1:0] provide opcode extensionality equivalent to some legacy prefixes (e.g., 00 = no prefix, 01 = 66H, 10 = F3H, and 11 = F2H). Bits[6:3], shown as vvvv, may be used to: 1) encode the first source register operand, specified in inverted (1s complement) form and valid for instructions with 2 or more source operands; 2) encode the destination register operand, specified in 1s complement form for certain vector shifts; or 3) not encode any operand, the field is reserved and should contain a certain value, such as 111 1b.

Instructions that use this prefix may use the MOD R/M R/M field 1546 to encode the instruction operand that references a memory address or encode either the destination register operand or a source register operand.

Instructions that use this prefix may use the MOD R/M reg field 1544 to encode either the destination register operand or a source register operand, or to be treated as an opcode extension and not used to encode any instruction operand.

For instruction syntax that supports four operands, vvvv, the MOD R/M R/M field 1546, and the MOD R/M reg field 1544 encode three of the four operands. Bits[7:4] of the immediate value field 1409 are then used to encode the third source register operand.

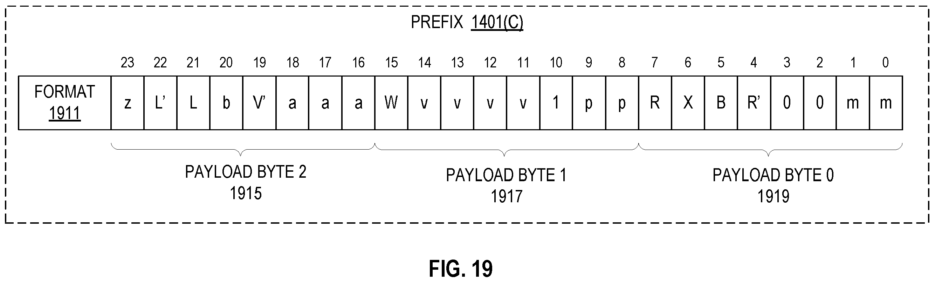

**FIG. 19** illustrates examples of a third prefix 1401(C). In some examples, the third prefix 1401(C) is an example of an EVEX prefix. The third prefix 1401(C) is a four-byte prefix.

The third prefix 1401(C) can encode thirty-two vector registers (e.g., 128-bit, 256-bit, and 512-bit registers) in 64-bit mode. In some examples, instructions that utilize a writemask/opmask (see discussion of registers in a previous figure, such as **FIG. 13**) or predication utilize this prefix. Opmask register allows for conditional processing or selection control. Opmask instructions, whose source/destination operands are opmask registers and treat the content of an opmask register as a single value, are encoded using the second prefix 1401(B).

The third prefix 1401(C) may encode functionality that is specific to instruction classes (e.g., a packed instruction with "load+op" semantic can support embedded broadcast functionality, a floating-point instruction with rounding semantic can support static rounding functionality, a floating-point instruction with non-rounding arithmetic semantic can support "suppress all exceptions" functionality, etc.).

The first byte of the third prefix 1401(C) is a format field 1911 that has a value, in one example, of 62H. Subsequent bytes are referred to as payload bytes 1915-1919 and collectively form a 24-bit value of P[23:0] providing specific capability in the form of one or more fields (detailed herein).

In some examples, P[1:0] of payload byte 1919 are identical to the low two mm bits. P[3:2] are reserved in some examples. Bit P[4] (R') allows access to the high sixteen vector register set when combined with P[7] and the MOD R/M reg field 1544. P[6] can also provide access to a high sixteen vector register when SIB-type addressing is not needed. P[7:5] consist of R, X, and B which are operand specifier modifier bits for vector register, general purpose register, memory addressing and allow access to the next set of 8 registers beyond the low 8 registers when combined with the MOD R/M register field 1544 and MOD R/M R/M field 1546. P[9:8] provides opcode extensionality equivalent to some legacy prefixes (e.g., 00 = no prefix, 01 = 66H, 10 = F3H, and 11 = F2H). P[10] in some examples is a fixed value of 1. P[14:11], shown as vvvv, may be used to: 1) encode the first source register operand, specified in inverted (1s complement) form and valid for instructions with 2 or more source operands; 2) encode the destination register operand, specified in 1s complement form for certain vector shifts; or 3) not encode any operand, the field is reserved and should contain a certain value, such as 1111b.

P[15] is similar to W of the first prefix 1401(A) and second prefix 1411(B) and may serve as an opcode extension bit or operand size promotion.

P[18:16] specify the index of a register in the opmask (writemask) registers (e.g., writemask/predicate registers 1315). In one example, the specific value aaa = 000 has a special behavior implying no opmask is used for the particular instruction (this may be implemented in a variety of ways including the use of an opmask hardwired to all ones or hardware that bypasses the masking hardware). When merging, vector masks allow any set of elements in the destination to be protected from updates during the execution of any operation (specified by the base operation and the augmentation operation); in other one example, preserving the old value of each element of the destination where the corresponding mask bit has a 0. In contrast, when zeroing vector masks allow any set of elements in the destination to be zeroed during the execution of any operation (specified by the base operation and the augmentation operation); in one example, an element of the destination is set to 0 when the corresponding mask bit has a 0 value. A subset of this functionality is the ability to control the vector length of the operation being performed (that is, the span of elements being modified, from the first to the last one); however, it is not necessary that the elements that are modified be consecutive. Thus, the opmask field allows for partial vector operations, including loads, stores, arithmetic, logical, etc. While examples are described in which the opmask field's content selects one of a number of opmask registers that contains the opmask to be used (and thus the opmask field's content indirectly identifies that masking to be performed), alternative examples instead or additional allow the mask write field's content to directly specify the masking to be performed.

P[19] can be combined with P[14:11] to encode a second source vector register in a non-destructive source syntax which can access an upper sixteen vector registers using P[19]. P[20] encodes multiple functionalities, which differ across different classes of instructions and can affect the meaning of the vector length/ rounding control specifier field (P[22:21]). P[23] indicates support for merging-writemasking (e.g., when set to 0) or support for zeroing and merging-writemasking (e.g., when set to 1).

Example examples of encoding of registers in instructions using the third prefix 1401(C) are detailed in the following tables.

**Table 1: 32-Register Support in 64-bit Mode**

| | 4 | 3 | [2:0] | REG. TYPE | COMMON USAGES |
|---|---|---|---|---|---|
| REG | R' | R | MOD R/M reg | GPR, Vector | Destination or Source |
| vvvv | V' | vvvv | | GPR, Vector | 2nd Source or Destination |
| RM | X | B | MOD R/M R/M | GPR, Vector | 1st Source or Destination |
| BASE | 0 | B | MOD R/M R/M | GPR | Memory addressing |
| INDEX | 0 | X | SIB.index | GPR | Memory addressing |
| VIDX | V' | X | SIB.index | Vector | VSIB memory addressing |

**Table 2: Encoding Register Specifiers in 32-bit Mode**

| | [2:0] | REG. TYPE | COMMON USAGES |
|---|---|---|---|
| REG | MOD R/M reg | GPR, Vector | Destination or Source |
| vvvv | vvvv | GPR, Vector | 2^{nd} Source or Destination |
| RM | MOD R/M R/M | GPR, Vector | 1^{st} Source or Destination |
| BASE | MOD R/M R/M | GPR | Memory addressing |
| INDEX | SIB.index | GPR | Memory addressing |
| VIDX | SIB.index | Vector | VSIB memory addressing |

**Table 3: Opmask Register Specifier Encoding**

| | [2:0] | REG. TYPE | COMMON USAGES |
|---|---|---|---|
| REG | MOD R/M Reg | k0-k7 | Source |
| VVVV | vvvv | k0-k7 | 2^{nd} Source |
| RM | MOD R/M R/M | k0-k7 | 1^{st} Source |
| {k1} | aaa | k0-k7 | Opmask |

Program code may be applied to input information to perform the functions described herein and generate output information. The output information may be applied to one or more output devices, in known fashion. For purposes of this application, a processing system includes any system that has a processor, such as, for example, a digital signal processor (DSP), a microcontroller, an application specific integrated circuit (ASIC), a field programmable gate array (FPGA), a microprocessor, or any combination thereof.

The program code may be implemented in a high-level procedural or object-oriented programming language to communicate with a processing system. The program code may also be implemented in assembly or machine language, if desired. In fact, the mechanisms described herein are not limited in scope to any particular programming language. In any case, the language may be a compiled or interpreted language.

Examples of the mechanisms disclosed herein may be implemented in hardware, software, firmware, or a combination of such implementation approaches. Examples may be implemented as computer programs or program code executing on programmable systems comprising at least one processor, a storage system (including volatile and non-volatile memory and/or storage elements), at least one input device, and at least one output device.

One or more aspects of at least one example may be implemented by representative instructions stored on a machine-readable medium which represents various logic within the processor, which when read by a machine causes the machine to fabricate logic to perform the techniques described herein. Such representations, known as "intellectual property (IP) cores" may be stored on a tangible, machine readable medium and supplied to various customers or manufacturing facilities to load into the fabrication machines that make the logic or processor.

Such machine-readable storage media may include, without limitation, non-transitory, tangible arrangements of articles manufactured or formed by a machine or device, including storage media such as hard disks, any other type of disk including floppy disks, optical disks, compact disk read-only memories (CD-ROMs), compact disk rewritables (CD-RWs), and magneto-optical disks, semiconductor devices such as read-only memories (ROMs), random access memories (RAMs) such as dynamic random access memories (DRAMs), static random access memories (SRAMs), erasable programmable read-only memories (EPROMs), flash memories, electrically erasable programmable read-only memories (EEPROMs), phase change memory (PCM), magnetic or optical cards, or any other type of media suitable for storing electronic instructions.

Accordingly, examples also include non-transitory, tangible machine-readable media containing instructions or containing design data, such as Hardware Description Language (HDL), which defines structures, circuits, apparatuses, processors and/or system features described herein. Such examples may also be referred to as program products.

Emulation (including binary translation, code morphing, etc.).

In some cases, an instruction converter may be used to convert an instruction from a source instruction set architecture to a target instruction set architecture. For example, the instruction converter may translate (e.g., using static binary translation, dynamic binary translation including dynamic compilation), morph, emulate, or otherwise convert an instruction to one or more other instructions to be processed by the core. The instruction converter may be implemented in software, hardware, firmware, or a combination thereof. The instruction converter may be on processor, off processor, or part on and part off processor.

**FIG. 20** is a block diagram illustrating the use of a software instruction converter to convert binary instructions in a source ISA to binary instructions in a target ISA according to examples. In the illustrated example, the instruction converter is a software instruction converter, although alternatively the instruction converter may be implemented in software, firmware, hardware, or various combinations thereof. **FIG. 20** shows a program in a high-level language 2002 may be compiled using a first ISA compiler 2004 to generate first ISA binary code 2006 that may be natively executed by a processor with at least one first ISA core 2016. The processor with at least one first ISA core 2016 represents any processor that can perform substantially the same functions as an Intel^{®} processor with at least one first ISA core by compatibly executing or otherwise processing (1) a substantial portion of the first ISA or (2) object code versions of applications or other software targeted to run on an Intel processor with at least one first ISA core, in order to achieve substantially the same result as a processor with at least one first ISA core. The first ISA compiler 2004 represents a compiler that is operable to generate first ISA binary code 2006 (e.g., object code) that can, with or without additional linkage processing, be executed on the processor with at least one first ISA core 2016. Similarly, **FIG. 20** shows the program in the high-level language 2002 may be compiled using an alternative ISA compiler 2008 to generate alternative ISA binary code 2010 that may be natively executed by a processor without a first ISA core 2014. The instruction converter 2012 is used to convert the first ISA binary code 2006 into code that may be natively executed by the processor without a first ISA core 2014. This converted code is not necessarily to be the same as the alternative ISA binary code 2010; however, the converted code will accomplish the general operation and be made up of instructions from the alternative ISA. Thus, the instruction converter 2012 represents software, firmware, hardware, or a combination thereof that, through emulation, simulation, or any other process, allows a processor or other electronic device that does not have a first ISA processor or core to execute the first ISA binary code 2006.

Components, features, and details described for any of **FIGs. 2-4** may also optionally apply to any of **FIGs. 1****,** **6****, and** **7****.** Components, features, and details described for any of the processors disclosed herein (e.g., 100, 200, 300, 400, 500) may optionally apply to any of the methods disclosed herein (e.g., 625, 732), which in embodiments may optionally be performed by and/or with such processors. Any of the processors described herein (e.g., 100, 200, 300, 400, 500) in embodiments may optionally be included in any of the systems disclosed herein (e.g., any of the systems of **FIGs. 9-10**). In addition, any of the instructions disclosed herein may in some embodiments optionally have any of the features or details of the instruction formats shown herein (e.g., the formats described for **FIGs. 14-19**).

References to "one example," "an example," etc., indicate that the example described may include a particular feature, structure, or characteristic, but every example may not necessarily include the particular feature, structure, or characteristic. Moreover, such phrases are not necessarily referring to the same example. Further, when a particular feature, structure, or characteristic is described in connection with an example, it is submitted that it is within the knowledge of one skilled in the art to affect such feature, structure, or characteristic in connection with other examples whether or not explicitly described.

Processor components disclosed herein may be said and/or claimed to be operative, operable, capable, able, configured adapted, or otherwise to perform an operation. For example, a decoder may be said and/or claimed to decode an instruction, an execution unit may be said and/or claimed to store a result, or the like. As used herein, these expressions refer to the characteristics, properties, or attributes of the components when in a powered-off state, and do not imply that the components or the device or apparatus in which they are included is currently powered on or operating. For clarity, it is to be understood that the processors and apparatus claimed herein are not claimed as being powered on or running.

In the description and claims, the terms "coupled" and/or "connected," along with their derivatives, may have been used. These terms are not intended as synonyms for each other. Rather, in embodiments, "connected" may be used to indicate that two or more elements are in direct physical and/or electrical contact with each other. "Coupled" may mean that two or more elements are in direct physical and/or electrical contact with each other. However, "coupled" may also mean that two or more elements are not in direct contact with each other, but still co-operate or interact with each other. For example, an execution unit may be coupled with a register and/or a decode unit through one or more intervening components. In the figures, arrows are used to show connections and couplings.

Some embodiments include an article of manufacture (e.g., a computer program product) that includes a machine-readable medium. The medium may include a mechanism that provides, for example stores, information in a form that is readable by the machine. The machine-readable medium may provide, or have stored thereon, an instruction or sequence of instructions, that if and/or when executed by a machine are operative to cause the machine to perform and/or result in the machine performing one or operations, methods, or techniques disclosed herein.

In some embodiments, the machine-readable medium may include a tangible and/or non-transitory machine-readable storage medium. For example, the non-transitory machine-readable storage medium may include a floppy diskette, an optical storage medium, an optical disk, an optical data storage device, a CD-ROM, a magnetic disk, a magneto-optical disk, a read only memory (ROM), a programmable ROM (PROM), an erasable-and-programmable ROM (EPROM), an electrically-erasable-and-programmable ROM (EEPROM), a random access memory (RAM), a static-RAM (SRAM), a dynamic-RAM (DRAM), a Flash memory, a phase-change memory, a phase-change data storage material, a non-volatile memory, a non-volatile data storage device, a non-transitory memory, a non-transitory data storage device, or the like. The non-transitory machine-readable storage medium does not consist of a transitory propagated signal. In some embodiments, the storage medium may include a tangible medium that includes solid-state matter or material, such as, for example, a semiconductor material, a phase change material, a magnetic solid material, a solid data storage material, etc. Alternatively, a non-tangible transitory computer-readable transmission media, such as, for example, an electrical, optical, acoustical, or other form of propagated signals - such as carrier waves, infrared signals, and digital signals, may optionally be used.

Examples of suitable machines include, but are not limited to, a general-purpose processor, a special-purpose processor, a digital logic circuit, an integrated circuit, or the like. Still other examples of suitable machines include a computer system or other electronic device that includes a processor, a digital logic circuit, or an integrated circuit. Examples of such computer systems or electronic devices include, but are not limited to, desktop computers, laptop computers, notebook computers, tablet computers, netbooks, smartphones, cellular phones, servers, network devices (e.g., routers and switches.), Mobile Internet devices (MIDs), media players, smart televisions, nettops, set-top boxes, and video game controllers.

Moreover, in the various examples described above, unless specifically noted otherwise, disjunctive language such as the phrase "at least one of A, B, or C" or "A, B, and/or C" is intended to be understood to mean either A, B, or C, or any combination thereof (i.e. A and B, A and C, B and C, and A, B and C).

In the description above, specific details have been set forth to provide a thorough understanding of the embodiments. However, other embodiments may be practiced without some of these specific details. Various modifications and changes may be made thereunto without departing from the broader spirit and scope of the disclosure as set forth in the claims. The specification and drawings are, accordingly, to be regarded in an illustrative rather than a restrictive sense. The scope of the invention is not to be determined by the specific examples provided above, but only by the claims below. In other instances, well-known circuits, structures, devices, and operations have been shown in block diagram form and/or without detail to avoid obscuring the understanding of the description.

### EXAMPLE EMBODIMENTS

The following examples pertain to further embodiments. Specifics in the examples may be used anywhere in one or more embodiments.

Example 1 is a processor or other apparatus including decoder circuitry to decode an instruction. The instruction to indicate a first vector register, a second vector register, and a third vector register. The first vector register having 128-bit lane to store a first matrix having two rows by K columns of data elements each having a first number of bits. K is equal to 64-bits divided by the first number of bits. The second vector register having a 128-bit lane to store a second matrix having K rows by two columns of data elements each having the first number of bits. The third vector register having a 128-bit lane to store a third matrix having two rows by two columns of data elements each having a second number of bits. The second number of bits being greater than the first number of bits. The apparatus also includes execution circuitry coupled with the decoder circuitry. The execution circuitry to perform operations corresponding to the instruction, including to generate a result matrix having two rows by two columns of result data elements each having the second number of bits. The result matrix representing an accumulation of the third matrix with a product matrix generated from a matrix multiplication using the first and second matrices. The execution unit is also to store the result matrix in the 128-bit lane of the third vector register.

Example 2 includes the apparatus of Example 1, where the execution circuitry, to generate and store the result matrix, is to: for each column n of the two columns of the second matrix, and for each row m of the two rows of the first matrix: convert K data elements from the row m of the first matrix to K corresponding converted data elements each having more bits than the first number of bits, and convert K data elements from the column n of the second matrix to K corresponding converted data elements each having more bits than the first number of bits; generate K products, including to multiply the K converted data elements corresponding to the row m and the K converted data elements corresponding to the column n; generate a result data element having the second number of bits, including to accumulate the K products with a data element from a corresponding row m of the two rows, and a corresponding column n of the two columns, of the third matrix; and store the result data element in the 128-bit lane of the third vector register at a position corresponding to the row m and the column n of the third matrix.

Example 3 includes the apparatus of any one of Examples 1 to 2, where the data elements of the first matrix, and the data elements of the second matrix, are 8-bit floating-point data elements.

Example 4 includes the apparatus of Example 3, where the 8-bit floating-point data elements each have four exponent bits and three explicit mantissa bits.

Example 5 includes the apparatus of Example 3, where the 8-bit floating-point data elements each have five exponent bits and two explicit mantissa bits.

Example 6 includes the apparatus of Example 3, where the 8-bit floating-point data elements of one of the first and second matrices have four exponent bits and three explicit mantissa bits, and where the 8-bit floating-point data elements of another of the first and second matrices have five exponent bits and two explicit mantissa bits.

Example 7 includes the apparatus of any one of Examples 1 to 2, where the data elements of the first matrix, and the data elements of the second matrix, are half precision floating-point data elements.

Example 8 includes the apparatus of any one of Examples 1 to 2, where the data elements of one of the first and second matrices are 8-bit signed integers, and where the data elements of another of the first and second matrices are 8-bit unsigned integers.

Example 9 includes the apparatus of any one of Examples 1 to 2, where the data elements of the first matrix, and the data elements of the second matrix, each have eight exponent bits and ten explicit mantissa bits.

Example 10 includes the apparatus of any one of Examples 1 to 9, where the data elements of the third matrix are single precision floating-point data elements.

Example 11 includes the apparatus of any one of Examples 1 to 10, further including a register having one or more fields to specify whether denormal results of floating-point operations are to be forced to zero, and optionally where the execution circuitry, to perform the operations corresponding to the instruction, is to force denormal results of floating-point operations to zero regardless of whether the one or more fields specify that denormal results of floating-point operations are to be forced to zero.

Example 12 includes the apparatus of any one of Examples 1 to 11, further including a floating-point control register, where the data elements of the first matrix are floating-point data elements, and optionally where the execution circuitry is to complete performance of the operations corresponding to the instruction without accessing the floating-point control register.

Example 13 includes the apparatus of any one of Examples 1 to 12, where the first vector register has a second 128-bit lane to store a fourth matrix having two rows by K columns of data elements each having the first number of bits, the second vector register has a second 128-bit lane to store a fifth matrix having K rows by two columns of data elements each having the first number of bits, and the third vector register has a second 128-bit lane to store a sixth matrix having two rows by two columns of data elements each having the second number of bits.

Example 14 includes the apparatus of Example 13, where the execution circuitry, to perform the operations corresponding to the instruction, is further to generate a second result matrix having two rows by two columns of result data elements each having the second number of bits. The second result matrix representing an accumulation of the sixth matrix with a product matrix generated from a matrix multiplication using the fourth and fifth matrices. The execution circuitry is also to store the second result matrix in the second 128-bit lane of the third vector register.

Example 15 is a processor or other apparatus including decoder circuitry to decode an instruction. The instruction to indicate a first vector register having a 128-bit lane to store a first matrix having two rows by eight columns of 8-bit floating-point data elements, to indicate a storage location having 128 bits to store a second matrix having eight rows by two columns of 8-bit floating-point data elements, and to indicate a second vector register having a 128-bit lane to store a third matrix having two rows by two columns of 32-bit single-precision floating-point data elements. The apparatus also includes execution circuitry coupled with the decoder circuitry. The execution circuitry is to perform operations corresponding to the instruction, including to generate a result matrix having two rows by two columns of 32-bit single-precision floating-point result data elements. The result matrix representing an accumulation of the third matrix with a product matrix generated from a matrix multiplication using the first and second matrices. The execution circuitry is also to store the result matrix in the 128-bit lane of the second vector register.

Example 16 includes the apparatus of Example 15, where the execution circuitry, to generate and store the result matrix, is to: for each column n of the two columns of the second matrix, and for each row m of the two rows of the first matrix: convert eight data elements from the row m of the first matrix to eight corresponding converted data elements each having more than eight bits, and convert eight data elements from the column n of the second matrix to eight corresponding converted data elements each having more than eight bits; generate eight products, including to multiply the eight converted data elements corresponding to the row m and the eight converted data elements corresponding to the column n; generate a 32-bit single-precision floating-point result data element, including to accumulate the eight products with a data element from a corresponding row m of the two rows, and a corresponding column n of the two columns, of the third matrix; and store the 32-bit single-precision floating-point result data element in the 128-bit lane of the third vector register at a position corresponding to the row m and the column n of the third matrix.

Example 17 includes the apparatus of any one of Examples 15 to 16, where the 8-bit floating-point data elements of the first matrix, and the 8-bit floating-point data elements of the second matrix, each have four exponent bits and three explicit mantissa bits.

Example 18 includes the apparatus of any one of Examples 15 to 16, where the 8-bit floating-point data elements of the first matrix, and the 8-bit floating-point data elements of the second matrix, each have five exponent bits and two explicit mantissa bits.

Example 19 includes the apparatus of any one of Examples 15 to 16, where the 8-bit floating-point data elements of the first matrix each have four exponent bits and three explicit mantissa bits, and optionally where the 8-bit floating-point data elements of the second matrix each have five exponent bits and two explicit mantissa bits.

Example 20 includes the apparatus of any one of Examples 15 to 16, where the 8-bit floating-point data elements of the first matrix each have five exponent bits and two explicit mantissa bits, and optionally where the 8-bit floating-point data elements of the second matrix each have four exponent bits and three explicit mantissa bits.

Example 21 includes the apparatus of any one of Examples 15 to 20, further including a floating-point control register having one or more fields to specify a floating-point round mode to be used for floating-point operations, and optionally where the execution circuitry, to generate the result matrix, is to perform floating-point rounding according to a round to nearest even (RNE) round mode regardless of whether the one or more fields specify that the floating-point round mode is the RNE round mode.

Example 22 includes the apparatus of any one of Examples 15 to 21, further including a floating-point control register having one or more fields to specify whether input denormal values are to be treated as zero, and optionally where the execution circuitry, to perform the operations corresponding to the instruction, is not to treat the input denormal values as zero regardless of whether the one or more fields specify that the input denormal values are to be treated as zero.

Example 23 includes the apparatus of any one of Examples 15 to 22, further including a floating-point control register having one or more fields to specify whether denormal results are to be made zero, and where the execution circuitry, to perform the operations corresponding to the instruction, is to make the denormal results zero regardless of whether the one or more fields specify that the denormal results are to be made zero.

Example 24 includes the apparatus of any one of Examples 15 to 23, further including a floating-point control register having one or more fields to specify whether floating-point exceptions are to be reported, and optionally where the execution circuitry, to perform the operations corresponding to the instruction, is not to report the floating-point exceptions regardless of whether the one or more fields specify that the floating-point exceptions are to be reported.

Example 25 includes the apparatus of any one of Examples 15 to 24, further including a floating-point control register, and optionally where the execution circuitry is to complete the performance of the operations corresponding to the instruction without accessing the floating-point control register.

Example 26 includes the apparatus of any one of Examples 15 to 25, where the execution circuitry, to generate the result matrix, is to generate all products of the matrix multiplication using the first and second matrices before accumulation of any of said all products of the matrix multiplication with the third matrix.

Example 27 includes the apparatus of any one of Examples 15 to 26, where the instruction allows the storage location to be a third vector register but optionally does not allow the storage location to be in memory.

Example 28 includes the apparatus of any one of Examples 15 to 27, where the first vector register has a second 128-bit lane to store a fourth matrix having two rows by eight columns of 8-bit floating-point data elements, the storage location has a second 128 bits to store a fifth matrix having eight rows by two columns of 8-bit floating-point data elements, and the second vector register has a second 128-bit lane to store a sixth matrix having two rows by two columns of 32-bit single-precision floating-point data elements, and optionally where the execution circuitry, to perform the operations corresponding to the instruction, is further to generate a second result matrix having two rows by two columns of 32-bit single-precision floating-point result data elements. The second result matrix representing an accumulation of the sixth matrix with a product matrix generated from a matrix multiplication using the fourth and fifth matrices. The execution circuitry is also optionally to store the second result matrix in the second 128-bit lane of the second vector register.

Example 29 is a method performed by a processor or other apparatus including decoding an instruction indicating a first vector register having a 128-bit lane storing a first matrix having two rows by eight columns of 8-bit floating-point data elements, indicating a storage location having 128 bits storing a second matrix having eight rows by two columns of 8-bit floating-point data elements, and indicating a second vector register having a 128-bit lane storing a third matrix having two rows by two columns of 32-bit single-precision floating-point data elements. The method also includes performing operations corresponding to the instruction, including generating a result matrix having two rows by two columns of 32-bit single-precision floating-point result data elements. The result matrix representing an accumulation of the third matrix with a product matrix generated from a matrix multiplication using the first and second matrices. The operations also include storing the result matrix in the 128-bit lane of the second vector register.

Example 30 includes the method of Example 29, where the 8-bit floating-point data elements of one of the first and second matrices each have four exponent bits and three explicit mantissa bits, and optionally where the 8-bit floating-point data elements of another of the first and second matrices each have five exponent bits and two explicit mantissa bits.

Example 31 includes the method of any one of Examples 29 to 30, where generating the result matrix includes generating all products of the matrix multiplication using the first and second matrices before accumulation of any of said all products of the matrix multiplication with the third matrix.

Example 32 is a computer system or other system including a processor including decoder circuitry to decode an instruction. The instruction to indicate a first vector register having a 128-bit lane to store a first matrix having two rows by eight columns of 8-bit floating-point data elements, a storage location having 128 bits to store a second matrix having eight rows by two columns of 8-bit floating-point data elements, and a second vector register having a 128-bit lane to store a third matrix having two rows by two columns of 32-bit single-precision floating-point data elements. The processor also includes execution circuitry coupled with the decoder circuitry. The execution circuitry to perform operations corresponding to the instruction, including to generate a result matrix having two rows by two columns of 32-bit single-precision floating-point result data elements. The result matrix representing an accumulation of the third matrix with a product matrix generated from a matrix multiplication using the first and second matrices. The operations also include to store the result matrix in the 128-bit lane of the second vector register. The system also includes a dynamic random access memory (DRAM) coupled with the processor.

Example 33 includes the system of Example 32, where the 8-bit floating-point data elements of one of the first and second matrices each have four exponent bits and three explicit mantissa bits, and optionally where the 8-bit floating-point data elements of another of the first and second matrices each have five exponent bits and two explicit mantissa bits.

Example 34 includes the system of any one of Examples 32 to 33, further including a floating-point control register having one or more fields to specify whether denormal values in inputs to floating-point operations are to be treated as zero, and optionally where the execution circuitry, to perform the operations corresponding to the instruction, is not to treat denormal values in inputs to floating-point operations as zero regardless of whether the one or more fields specify that denormal values in inputs to floating-point operations are to be treated as zero.

Example 35 is a processor or other apparatus operative to perform the method of any one of Examples 29 to 31.

Example 36 is a processor or other apparatus that includes a means or plurality of means for performing the method of any one of Examples 29 to 31.

Example 37 is a processor or other apparatus that includes any combination of modules and/or units and/or logic and/or circuitry and/or means operative to perform the method of any one of Examples 29 to 31.

Example 38 is an optionally non-transitory and/or tangible machine-readable medium, which optionally stores or otherwise provides instructions including a first instruction, the first instruction if and/or when executed by a processor, computer system, electronic device, or other machine, is operative to cause the machine to perform the method of any one of Examples 29 to 31.

## Claims

1. An apparatus comprising:
decoder means for decoding an instruction, the instruction to indicate a first vector register having a 128-bit lane to store a first matrix having two rows by eight columns of 8-bit floating-point data elements, to indicate a storage location having 128 bits to store a second matrix having eight rows by two columns of 8-bit floating-point data elements, and to indicate a second vector register having a 128-bit lane to store a third matrix having two rows by two columns of 32-bit single-precision floating-point data elements; and
execution means coupled with the decoder means, the execution means for performing operations corresponding to the instruction, including to:
generate a result matrix having two rows by two columns of 32-bit single-precision floating-point result data elements, the result matrix representing an accumulation of the third matrix with a product matrix generated from a matrix multiplication using the first and second matrices; and
store the result matrix in the 128-bit lane of the second vector register.

2. The apparatus of claim 1, wherein the execution means, to generate and store the result matrix, is to:
for each column n of the two columns of the second matrix, and for each row m of the two rows of the first matrix:
convert eight data elements from the row m of the first matrix to eight corresponding converted data elements each having more than eight bits, and convert eight data elements from the column n of the second matrix to eight corresponding converted data elements each having more than eight bits;
generate eight products, including to multiply the eight converted data elements corresponding to the row m and the eight converted data elements corresponding to the column n;
generate a 32-bit single-precision floating-point result data element, including to accumulate the eight products with a data element from a corresponding row m of the two rows, and a corresponding column n of the two columns, of the third matrix; and
store the 32-bit single-precision floating-point result data element in the 128-bit lane of the third vector register at a position corresponding to the row m and the column n of the third matrix.

3. The apparatus of any one of claims 1 to 2, wherein the 8-bit floating-point data elements of the first matrix, and the 8-bit floating-point data elements of the second matrix, each have four exponent bits and three explicit mantissa bits.

4. The apparatus of any one of claims 1 to 2, wherein the 8-bit floating-point data elements of the first matrix, and the 8-bit floating-point data elements of the second matrix, each have five exponent bits and two explicit mantissa bits.

5. The apparatus of any one of claims 1 to 2, wherein the 8-bit floating-point data elements of the first matrix each have four exponent bits and three explicit mantissa bits, and wherein the 8-bit floating-point data elements of the second matrix each have five exponent bits and two explicit mantissa bits.

6. The apparatus of any one of claims 1 to 2, wherein the 8-bit floating-point data elements of the first matrix each have five exponent bits and two explicit mantissa bits, and wherein the 8-bit floating-point data elements of the second matrix each have four exponent bits and three explicit mantissa bits.

7. The apparatus of any one of claims 1 to 6, further comprising a floating-point control register having one or more fields to specify a floating-point round mode to be used for floating-point operations, and wherein the execution means, to generate the result matrix, is to perform floating-point rounding according to a round to nearest even (RNE) round mode regardless of whether the one or more fields specify that the floating-point round mode is the RNE round mode, wherein the floating-point control register has one or more fields to specify whether input denormal values are to be treated as zero, and wherein the execution means, to perform the operations corresponding to the instruction, is not to treat the input denormal values as zero regardless of whether the one or more fields specify that the input denormal values are to be treated as zero.

8. The apparatus of any one of claims 1 to 7, further comprising a floating-point control register having one or more fields to specify whether denormal results are to be made zero, and wherein the execution means, to perform the operations corresponding to the instruction, is to make the denormal results zero regardless of whether the one or more fields specify that the denormal results are to be made zero, wherein the floating-point control register has one or more fields to specify whether floating-point exceptions are to be reported, and wherein the execution means, to perform the operations corresponding to the instruction, is not to report the floating-point exceptions regardless of whether the one or more fields specify that the floating-point exceptions are to be reported.

9. The apparatus of any one of claims 1 to 8, wherein the execution means, to generate the result matrix, is to generate all products of the matrix multiplication using the first and second matrices before accumulation of any of said all products of the matrix multiplication with the third matrix.

10. The apparatus of any one of claims 1 to 9, wherein the first vector register has a second 128-bit lane to store a fourth matrix having two rows by eight columns of 8-bit floating-point data elements, the storage location has a second 128 bits to store a fifth matrix having eight rows by two columns of 8-bit floating-point data elements, and the second vector register has a second 128-bit lane to store a sixth matrix having two rows by two columns of 32-bit single-precision floating-point data elements, and wherein the execution means, to perform the operations corresponding to the instruction, is further to:
generate a second result matrix having two rows by two columns of 32-bit single-precision floating-point result data elements, the second result matrix representing an accumulation of the sixth matrix with a product matrix generated from a matrix multiplication using the fourth and fifth matrices; and
store the second result matrix in the second 128-bit lane of the second vector register.

11. A method comprising:
decoding an instruction indicating a first vector register having a 128-bit lane storing a first matrix having two rows by eight columns of 8-bit floating-point data elements, indicating a storage location having 128 bits storing a second matrix having eight rows by two columns of 8-bit floating-point data elements, and indicating a second vector register having a 128-bit lane storing a third matrix having two rows by two columns of 32-bit single-precision floating-point data elements; and
performing operations corresponding to the instruction, including:
generating a result matrix having two rows by two columns of 32-bit single-precision floating-point result data elements, the result matrix representing an accumulation of the third matrix with a product matrix generated from a matrix multiplication using the first and second matrices; and
storing the result matrix in the 128-bit lane of the second vector register.

12. The method of claim 11, wherein the 8-bit floating-point data elements of one of the first and second matrices each have four exponent bits and three explicit mantissa bits, and wherein the 8-bit floating-point data elements of another of the first and second matrices each have five exponent bits and two explicit mantissa bits.

13. The method of any one of claims 11 to 12 , wherein generating the result matrix includes generating all products of the matrix multiplication using the first and second matrices before accumulation of any of said all products of the matrix multiplication with the third matrix.

14. A machine-readable storage including machine-readable instructions that when executed cause a machine to implement a method as claimed in any one of claims 11 to 13.

15. A computer program comprising instructions that when executed by a computer cause the computer to carry out the method as claimed in any one of claims 11 to 13.
